(19) Europäisches Patentamt / European Patent Office / Office européen des brevets

(11) **EP 1 956 459 B1**

(12) **EUROPÄISCHE PATENTSCHRIFT**

(45) Veröffentlichungstag und Bekanntmachung des Hinweises auf die Patenterteilung:
**18.11.2009 Patentblatt 2009/47**

(51) Int Cl.:
***G05D 19/02*** *(2006.01)*

(21) Anmeldenummer: **07002445.0**

(22) Anmeldetag: **05.02.2007**

(54) **Regelungssystem zur aktiven Schwingungsisolation einer gelagerten Nutzlast**

Regulating system for active vibration isolation of a stored load

Système de régulation destiné à l'isolation active des oscillations d'une charge utile stockée

(84) Benannte Vertragsstaaten:
**CH DE GB LI NL**

(43) Veröffentlichungstag der Anmeldung:
**13.08.2008 Patentblatt 2008/33**

(73) Patentinhaber: **Integrated Dynamics Engineering GmbH**
**65479 Raunheim (DE)**

(72) Erfinder: **Heiland, Peter**
**65479 Raunheim (DE)**

(74) Vertreter: **Blumbach - Zinngrebe**
**Patentanwälte**
**Alexandrastrasse 5**
**65187 Wiesbaden (DE)**

(56) Entgegenhaltungen:
**EP-A- 1 197 824     US-A- 4 600 863**
**US-A- 4 999 534**

• **LEE T H ET AL: "A fuzzy controller with decoupling for multivariable nonlinear servo-mechanisms, with application to real-time control of a passive line-of-sight stabilization system" MECHATRONICS, PERGAMON PRESS, OXFORD, GB, Bd. 7, Nr. 1, Februar 1997 (1997-02), Seiten 83-104, XP004054953 ISSN: 0957-4158**

**EP 1 956 459 B1**

**Beschreibung**

Die Erfindung bezieht sich auf ein Regelungssystem zur aktiven Schwingungsisolation einer gelagerten Nutzlast, welches eine Anzahl von Schwingungssignalgebern zur Lieferung von Sensorsignalen, eine Anzahl von Aktoren zur Schwingungsunterdrückung und eine Reglervorrichtung zur Verarbeitung der Sensorsignale in Aktor-Stellsignale aufweist.

Häufig wird die zu isolierende Nutzlast mittels drei oder mehr Isolatormodulen gelagert, welchen üblicherweise jeweils zwei Aktoren für horizontale und vertikale Kraftbeauschlagung zugeordnet sind, und Sensoren erfassen horizontale und vertikale Schwingungsbewegungen. In der Summe aller Sensoren und Aktoren werden dann deren horizontale und vertikalen Orientierungen so gewählt, dass alle Freiheitsgrade der Bewegung geregelt und also erfasst und angesteuert werden können.

Derartige Regelungssysteme sind grundsätzlich bekannt und jeweilige Reglervorrichtungen können auf der analogen oder auf der digitalen Ebene arbeiten. Vorteil einer Signalverarbeitung auf analoger Ebene ist die erzielbare raschere Reaktionszeit auf Störungen hin, die auf das Schwingungsisolationssystem einwirken, und zwar im Vergleich zur digitalen Signalverarbeitung. Jede Analog/Digital-Umwandlung, die Abtastrate und die Rechenzeit innerhalb der Abtastrate beeinflussen die Signallaufzeit. In der Praxis bestimmt die Komplexität des Regelungsalgorithmus, insbesondere zusammen mit der Rechenleistung eines digitalen Signalprozessors (DSP) somit wesentlich die maximal mögliche Abtastrate mit und damit die kürzest mögliche Signallaufzeit. Gegenüber analog arbeitenden Reglervorrichtungen hat eine digital arbeitende Reglervorrichtung wiederum bedeutende Vorteile hinsichtlich guter Konfigurierbarkeit, Steuerungsmöglichkeiten mittels PC-Computer und Anpassungsmöglichkeit an sich ändernde Systembedingungen.

Häufig besitzen bisher bekannte Regelungssysteme zur Schwingungsisolation jedoch voneinander abhängige, sogenannte co-lokierte, Regelungsstrecken, insbesondere, wenn jeweils ein Sensor und ein Aktor als Regelstrecke fungieren und diese notwendigerweise räumlich nah beieinander angebracht sein müssen, so dass sich in der Summe dann für stärkere Bewegungen das Ziel der Schwingungsisolation ergibt. Die Regelstrecken können sich folglich gegenseitig beeinflussen, welches zu Regelinstabilitäten führt insbesondere, wenn transiente Störungen auf das System treffen.

In der EP 1 197 824 A1 ist z.B. eine Vibrationsisolationsvorrichtung mit einer Mehrzahl von Sensoren und einer Mehrzahl von Aktuatore und ein Verfahren zur Schwingungsisolation beschrieben, welches jedoch auf der einschränkenden Annahme basiert, dass das Zentrum des federnden Auflagers stets mit dem Schwerkraftzentrum übereinstimmt.

Die US 4,999,534 offenbart eine aktive Vibrationsreduktion in einer Vorrichtung mit einer Querkopplung zwischen den Steuerachsen.

Eine Aufgabe der Erfindung ist es, ein weiteres, neues und wesentlich verbessertes Regelungssystem zur Regelung einer Schwingungsisolation aufzuzeigen, mit welchem insbesondere die Schwingungsisolation bei Entkopplung aller zu berücksichtigenden Freiheitsgrade ermöglicht wird, so dass zusätzliche Berechnungen zur Kompensation von Querkopplungen in den Regelstrecken vermieden werden können.

Die erfindungsgemäße Lösung der Aufgabe ist bereits durch einen Gegenstand mit den Merkmalen eines anhängenden unabhängigen Anspruchs gegeben.

Vorteilhafte und/oder bevorzugte Ausführungsformen und Weiterbildungen der Erfindung sind Gegenstand der Unteransprüche, welche, soweit nicht anders ausdrücklich angezeigt, individuell miteinander kombinierbar sind.

Die Erfindung schlägt zur Lösung folglich ein Regelungssystem zur aktiven schwingungsisolation einer gelagerten Nutzlast vor, welches eine Anzahl von Schwingungssignalgebern bzw. Sensoren zur Lieferung von Sensorsignalen, eine Anzahl von Aktoren zur Schwingungsunterdrückung und eine Reglervorrichtung zur Verarbeitung der Sensorsignale in Aktor-Stellsignale umfasst,
wobei die Reglervorrichtung angepasst ist eine Verarbeitung von Positionsdaten und Orientierungsdaten aller zur Verfügung stehenden Sensoren zu einer Sensorsteuermatrix und eine Verarbeitung von Positionsdaten und orientierungsdaten aller zur Verfügung stehenden Aktoren zu einer Aktorsteuermatrix durchzuführen, und zwar zur nachfolgenden Berechnung von Achseneineingangssignalen in orthogonalen Freiheitsgraden aus den Sensorsignalen und der Sensorsteuermatrix und zur Berechnung aus zur Schwingungsunterdrückung aus den Achseneingangssignalen berechneten Achsenausgangssignalen und der Aktorsteuermatrix von gewichteten Aktor-Stellsignalen. Die Berechnung von Achsenausgangssignale zur Schwingungsunterdrückung bzw. -isolierung aus den Achseneingangssignalen kann folglich in orthogonalen Freiheitsgraden unabhängig voneinander durchgeführt werden.

Die Nutzlast wird ferner bevorzugt mittels wenigstens einem Isolatormodul, insbesondere einem vertikal und horizontal wirksamen Luftlager, gelagert, welches eine Basisplatte, ein Zwischenteil, das auf der Basisplatte beweglich angeordnet ist und einen Kolben umfasst, der innerhalb des Zwischenteils beweglich angeordnet ist und die Last trägt, die gegenüber der Basisplatte in horizontaler und vertikaler Richtung schwingungsisoliert gestützt werden soll, wobei der Durchmesser der Oberseite des Kolbens zu der Wandstärke des Zwischenteils in einem Verhältnis von 10 bis 36, bevorzugt von 10 bis 16, besonders bevorzugt von 10,7 bis 15,1 steht.

Die Erfindung sieht für ein solches Regelungssystem ferner eine Reglervorrichtung vor, welche eine erste Verarbeitungseinheit umfasst zur Verarbeitung von Positionsdaten und Orientierungsdaten aller zur Verfügung stehenden Sensoren zur Lieferung von Sensorsignalen zu einer Sensorsteuermatrix sowie zur nachfolgenden Berechnung von Achseneineingangssignalen in orthogonalen Freiheitsgraden aus den Sensorsignalen und der Sensorsteuermatrix, einen der ersten Verarbeitungseinheit nachgeschalteten Regelungsstrecken-Kaskadenblock zur Verarbeitung der Achseneineingangssignale zu Achsenausgangssignalen in orthogonalen Freiheitsgraden und eine dem Regelungsstrecken-Kaskadenblock nachgeschaltete Verarbeitungseinheit zur Verabreitung von Positionsdaten und Orientierungsdaten aller zur Verfügung stehenden Aktoren zur Schwingungsunterdrückung zu einer Aktorsteuermatrix sowie zur nachfolgenden Berechnung von Aktor-Stellsignalen aus den Achsenausgangssignalen und der Aktorsteuermatrix.

Die Erfindung verwendet somit ein neues und wesentlich verbessertes Konzept zur Schwingungsisolationsregelung in Bezug auf alle Freiheitsgrade. Es werden alle zur Verfügung stehenden Sensoren und Aktoren in ihrer Orientierung und Position zusammengefasst und die gelieferten Sensorsignale sowie erforderliche Aktor-Stellsignale in Bezug auf die Freiheitsgrade anteilsmäßig verarbeitet, so dass diese voneinander unabhängig sind. Darüber hinaus ermöglicht die Erfindung die Einbeziehung von Starrkörper-Eigenmoden des dynamischen Systems, welche durch Steifigkeiten von zur Lagerung der zu isolierenden Nutzlast vorgesehenen passiven Isolatormodule bedingt sind, in die Signalverarbeitung, so dass sechs orthogonale Freiheitsgrade unabhängig voneinander regel- und parametrisierbar sind, und die Signalverarbeitung nicht nur primär auf kartesischen Koordinaten sondern auch auf Modalkoordinaten aufgebaut ist. Da insbesondere bei der Parametrisierung der Regelstrecken keine Rückwirkungen auf andere Regelstrecken zu erwarten sind, kann auch die Installation wesentlich vereinfacht werden.

Die Erfindung bedient sich folglich eines Tricks zur Verarbeitung von Sensorsignalen zu Aktor-Stellsignalen:, um die unabhängige Regelung von sechs Freiheitsgraden in nur sechs Regelstrecken bewirken zu können. Es sind in Folge insbesondere keine zusätzlichen Berechnungen zur Kompensation von Querkopplungen zu berücksichtigen, so dass der Berechnungsaufwand klein bleibt. Zusätzlich notwendige Matrixoperationen im Gegensatz zu einer co-lokierten Regelung werden dadurch gerechtfertigt, dass die Regelungsstrecken unabhängig parametrisier- und regelbar sind.

Weitere Vorteile und Merkmale der Erfindung ergeben sich aus der nachfolgenden Beschreibung bevorzugter, jedoch nicht einschränkender sondern lediglich beispielhafter Ausführungen der Erfindung unter Bezugnahme auf die beigefügten zeichnungen.

In den Zeichnungen zeigen:

Fig. 1: eine Skizze einer grundsätzlichen Anordnung von Komponenten eines Regelungssystems nach der Erfindung,

Fig. 2: eine Skizze einer Detailansicht einer in dem Regelungssystem nach Fig. 1 eingesetzten Reglervorrichtung nach der Erfindung,

Fig. 3: eine Skizze einer der Übersichtlichkeit halber idealisierten dreieckförmigen Anordnung von Sensoren um eine Nutzlast eines erfindungsgemäßen Regelungssystems,

Fig. 4: eine Skizze einer der Übersichtlichkeit halber idealisierten Anordnung von Aktoren für eine Nutzlast eines erfindungsgemäßen Regelungssystems, wobei jeder Aktor einem Isolatormodul zugeordnet ist, und

Fig. 5: eine vereinfachte schematische Darstellung eines Isolatormoduls in Schnittdarstellung zur Verwendung mit der erfindungsgemäßen Reglervorrichtung.

Bevor auf die erfindungsgemäß bevorzugte Signalverarbeitung im Einzelnen eingegangen wird, wird nachfolgend zunächst ein bevorzugter Aufbau eines Regelungssystems nach der Erfindung aufgezeigt.

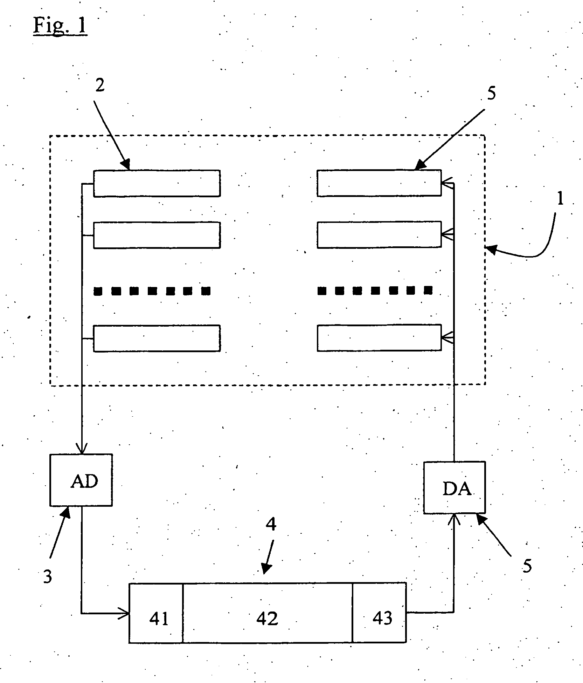

Fig. 1 stellt das Grundschema der Regelung eines bevorzugten aktiven Schwingungsisolationssystems 1 dar. Dieses Schwingungsisolationssystem stützt eine zu isolierende Masse oder Nutzlast gegenüber einer Standfläche und umfasst einen Satz von passiven Isolationselementen oder -modulen, wie z.B. Feder/Dämpfer-Kombinationen aus Gummi, Luftfedern, Stahlfedern und dergleichen und von aktiven Elementen, die im Gegentakt zu einer Schwingungsanregung der Masse geregelt werden, um die Masse beispielsweise gegen Bodenvibrationen zu isolieren. Derartige aktive Schwingungsisolationssysteme sind grundsätzlich bekannt und werden deshalb hier nicht näher dargestellt.

Im einzelnen enthalten diese aktiven Schwingungsisolationssysteme eine Anzahl von Schwingungssignalgeber oder Sensoren 2 zur Lieferung von Sensorsignalen und eine Anzahl von Aktoren 3 zur Schwingungsunterdrückung der Masse. Die Schwingungssignalgeber oder Sensoren 2 sind in bestimmter, für den Anwendungszweck angepasster Weise um die zu isolierende Masse angeordnet, auch hinsichtlich ihrer Richtungsempfindlichkeit. Die Aktoren 3 sind ebenfalls in geeigneter Weise zu der Masse angeordnet, um diese zu stützen und die Schwingung der Masse gegenüber der Umgebung zu isolieren oder solchen Schwingungen entgegenzuwirken.

Die Sensoren 2 und die Aktoren 3, welche im dargestellten Beispiel z.B. analoge Signale verarbeiten, sind über eine Reglervorrichtung 4 verbunden, die im dargestellten Beispiel digital arbeitet, weswegen ihr eingangsseitig ein Analog-Digital-Wandler 3 zur Umwandlung der analogen Sensorsignale in digitale Sensorsignale und ausgangsseitig ein Digital-Analog-Wandler 5 zur Umwandlung der digitalen in analoge Aktor-Stellsignale zugeschaltet sind.

Die Reglervorrichtung 4 kann in einem solchen Fall z.B. einen digitalen Signalprozessor DSP, und/oder ein FPGA (frei programmierbares Gate-Array) umfassen, wobei diesbezüglich auf die vom selben Anmelder am 5. August 2005 eingereichten Europäischen Patentanmeldung mit dem Aktenzeichen 05 017 138 verwiesen wird.

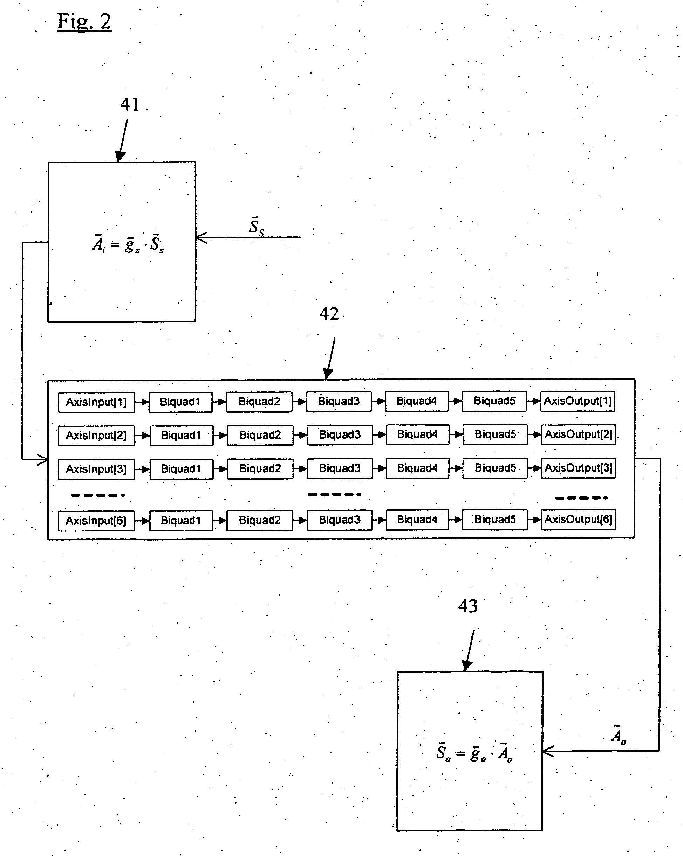

Fig. 2 zeigt den inneren Aufbau einer erfindungsgemäßen Reglervorrichtung 4. Es ist eine Verarbeitungseinheit 41 zur Berechnung einer Sensorsteuermatrix $\overleftrightarrow{g}_s$ vorgesehen sowie zur nachfolgenden Verarbeitung der von den Sensoren gelieferten Sensorsignale $\vec{S}_s$ mit dieser in voneinander unabhängige Achseneingangssignale $\vec{A}_i$. Ferner ist eine Verarbeitungseinheit 43 zur Berechnung einer Aktorsteuermatrix $\overleftrightarrow{g}_a$ vorgesehen sowie zur nachfolgenden Verarbeitung der von den Regelstrecken gelieferten, berechneten Achsenausgangssignale $\vec{A}_o$ mit dieser in anteilsmäßige Aktor-Stellsignale $\vec{S}_a$. Der bei Fig. 2 dargestellte Regelungsstrecken-Kaskadenblock 42, der die Achseneingangssignale $\vec{A}_i$, bei Fig. 2 auch als "Axisinput (i)" mit i= 1 ... 6 bezeichnet, in Achsenausgangssignale $\vec{A}_o$, bei Fig. 2 auch als "Axisoutput (i)" mit i= 1 ... 6 bezeichnet, verarbeitet, kann wie bei vorstehend inkorporierter Patentanmeldung im Detail beschrieben aufgebaut sein.

Die einzelnen Sensorsignale $\vec{S}_s$ einer Anzahl Ns von Sensoren werden der verarbeitungseinheit 41 zugeführt, welche eine 6xNs-Matrix vor der eigentlichen Regelung erzeugt und die Sensorsignale $\vec{S}_s$ darauf hin mit der 6xNs-Matrix multipliziert, um zu sechs Achseneingangssignalen $\vec{A}_i$ für die insgesamt sechs Freiheitsgrade, d.h. drei translatorische und drei rotatorische, zu gelangen. In allgemeiner Form ergibt sich somit für die Verarbeitungseinheit 41 eine Berechnungsfunktion von $\vec{A}_i = \overleftrightarrow{g}_s \cdot \vec{S}_s$, wobei anschließend der die Achseneingangssignale enthaltende Achsensignalvektor $\vec{A}_i$ in dem dargestellten, in Bezug auf die vorstehend miteinbezogene Patentanmeldung bevorzugten oder einen anderen Regelungsstrecken-Kaskadenblock 42, zu einem die Achsen-Ausgangssignale enthaltenden Achsenausgangssignalvektor $\vec{A}_o$ verarbeitet wird.

Die Ausgangssignale des Achsenausgangssignalvektors $\vec{A}_o$ werden der Verarbeitungseinheit 43 zugeführt, welche diese darauf hin für eine Anzahl Na von Aktoren mit einer zuvor erzeugten 6xNa-Matrix multipliziert, um eine Anzahl Na von Aktor-Stellsignalen $\vec{S}_a$ zu erzeugen. In allgemeiner Form ergibt sich somit für die verarbeitungseinheit 43 eine Berechnungsfunktion von

$$\vec{S}_a = \overleftrightarrow{g}_a \cdot \vec{A}_u.$$

Für den Fall, dass weitere Regler vorgesehen sind, kann gleichfalls auf die vorstehend in Bezug genommene Patentanmeldung verwiesen werden.

Gemäß der Erfindung werden somit alle zur Verfügung stehenden Sensorsignale der Ns Sensoren in einem Vektor $\vec{S}_s$ zusammengefasst, und eine Matrix $\overleftrightarrow{g}_s$ der Dimension 6xNs (bei sechs zu berücksichtigenden Freiheitsgraden) generiert, um aus dem Vektor $\vec{S}_s$ per Matrixmultiplikation einen Regelungsvektor $\vec{A}_i$ mit orthogonalen Achseneingangssignalen zu verarbeiten. Dabei kommt der Bestimmung von $\overleftrightarrow{g}_s$ natürlich eine entscheidende Bedeutung zu, da sie dafür sorgt, dass die Entkopplung perfekt ist. Hierbei schlägt die Erfindung vor, wie nachfolgend beschrieben, die Positionen der Sensoren sowie deren Orientierung zusammen mit dem Schwerpunkt des Systems zu berücksichtigen. Die zur Schwingungsisolation berechneten Achsenausgangssignale nach Durchlaufen der Verarbeitungseinheit 42 werden wiederum auf die zur Verfügung stehende Anzahl Na von Aktoren verteilt. Dazu wird eine weitere Matrix $\overleftrightarrow{g}_a$ (der Dimension 6xNa bei sechs zu berücksichtigenden Freiheitsgraden) vorab generiert, die die Positionen der Aktoren und deren orientierung in Bezug auf den schwerpunkt des Systems berücksichtigt.

Auf die Generierung von zur Entkopplung der Achsensignale eingesetzten Matrizen und der weiteren Signalverarbeitung nach der Erfindung wird nachfolgend anhand von beispielhaften Ausführungsformen eingegangen.

Die Erfindung geht hierbei zunächst davon aus, dass beim Messen von Übertragungsfunktionen eines Schwingungsisolationssystems häufig festgestellt wird, dass auf einer Achse eine Vielzahl von Resonanzspitzen existieren und nicht nur eine. Ein wesentlicher Grund hierfür ist, dass die Steuerungsachsen des Systems, die herkömmlicherweise so gewählt sind, dass diese den sechs kartesischen Freiheitsgraden genügen, das heißt den drei translatorischen Freiheitsgraden entlang der X-, Y- und Z-Achse sowie den drei rotatorischen Freiheitsgraden um diese Achsen herum, nachfolgend als XT, YT, ZT, XR, YR bzw. ZR bezeichnet, nicht ausreichend entkoppelt sind. Mit anderen Worten, wenn nur ein Freiheitsgrad angeregt werden soll, werden ein oder mehrere andere Freiheitsgrade auch mit angeregt. Das führt zwangläufig zu Problemen bei der Einstellung einer Reglervorrichtung für dieses Schwingungsisolationssystems, beispielsweise weil zusätzliche Phasenverschiebungen in die Frequenzcharakteristika eingeführt werden. Wenn z.B. ein zur vertikalen Kraftbeaufschlagung ausgerichteter bzw. orientierter Aktor unter der einen Ecke einer rechtwinkligen Platte, die auf vier Isolatormodulen ruht, angeregt wird, führt dies herkömmlicherweise auch dazu, dass auch an den benachbarten Ecken eine Bewegung erfasst wird.

Die erfindungsgemäße Reglervorrichtung verarbeitet daher in der Sensorsteuermatrix $\overleftrightarrow{g}_s$ die Positionsdaten und Orientierungsdaten aller zur Verfügung stehenden Sensoren und in der Aktorsteuermatrix $\overleftrightarrow{g}_a$ die Positionsdaten und Orientierungsdaten aller zur Verfügung stehenden Aktoren, wie nachfolgend beschrieben.

Angenommen sei zunächst ein allgemeines aktives Schwingungsisolationssystem, welches eine Anzahl Ns von Sensoren und eine Anzahl Na von Aktoren besitzt. Die zufällige Position des i-ten Aktors und des i-ten Sensors in Bezug auf das Schwerpunkt des zu isolierenden Systems, also insbesondere des oder der Isolatormodul(e) und der hierüber gelagerten Masse, wird bestimmt und kann durch die Vektoren $\vec{p}_{ai}$ bzw. $\vec{p}_{si}$ dem Regelungssystem vorgegeben werden. Ferner sind die Sensoren und Aktoren jeweils zur Erfassung von Schwingungsanteilen entlang einer Richtung bzw. zum Bewirken von Bewegungen entlang einer Richtung angeordnet. Diese Anordnungen bzw. Orientierungen werden ebenfalls im vorfeld bestimmt und können über die Vektoren $\vec{r}_{si}$ bzw. $\vec{r}_{ai}$ dem Regelungssystem vorgegeben werden. Zusätzlich werden für die jeweiligen Sensorsignale und Aktorsignale Gewichtungsfaktoren $\vec{s}_{ij}$ bzw. $\vec{a}_{ij}$ eingegeben, um entsprechend der jeweiligen Orientierung den j-ten kartesischen Freiheitsgrad anteilsmäßig zu berücksichtigen.

Da sich die Vorgehensweisen für das Erzeugen der Steuermatrizen für die Sensoren und für die Aktoren einander im Wesentlichen entsprechen, wird anstelle der Bezeichnungen "s" für Sensoren und "a" für Aktoren nachfolgend auch eine Bezeichnung "g" gewählt, die generell eine solche Einrichtung bezeichnet. Folglich wird zunächst von einer Anzahl "Ng" von Einrichtungen mit jeweiligen Positionen $\vec{p}_{gi}$, Richtungen $\vec{r}_{gi}$ und Gewichtungen $\vec{g}_{gi}$ ausgegangen.

Die Gesamtkraft, die durch die Aktoren entlang den translatorischen Freiheitsgraden j (mit j= 1...3) auf die Nutzlast ausgeübt wird, ergibt sich somit zu

$$f_j = \sum_{i=1}^{N_g} g_{ij}\, r_{gi}' \cdot \ddot{e}_j$$

wobei $\vec{e}_j$ der Einheitsvektor entlang des jeweiligen Freiheitsgrades ist, beispielsweise also $\vec{e}_x$ für eine X-Richtung.

Angewandt auf die Sensoren gilt dies in entsprechender weise für die von den Sensoren erfasste Gesamtposition oder Gesamtgeschwindigkeit der Masse, je nachdem, ob gemäß spezifischer Applikation Positions- oder Geschwindigkeitssensoren zur Anwendung kommen.

Das Gesamtmoment um eine jeweilige kartesische Achse j (mit j= 1...3) ergibt sich zu

$$m_j = \sum_{i=1}^{N_g} g_{i,j,3}\, (\vec{p}_{gi} \times r_{gi}') \cdot \vec{e}_j$$

wobei $\vec{e}_j$ nunmehr der Einheitsvektor entlang der Rotationsachse ist, also beispielsweise $\vec{e}_y$ für eine Y-Rotation, und "$\times$" das Symbol für ein Vektorkreuzprodukt darstellt.

Angewandt auf die Sensoren gilt dies wiederum in entsprechender Weise für die von den Sensoren erfassten Gesamtwinkel oder Gesamtwinkgeschwindigkeiten.

Zusammengefasst, resultiert in weiter verallgemeinerter Form ein sechsdimensionaler Kraftvektor (oder entsprechend ein Positions- bzw. Geschwindigkeitsvektor)

$$\vec{F} = \begin{bmatrix} \vec{f} \\ \vec{m} \end{bmatrix}$$

wobei in diesem Fall der Index j von 1 bis 6 läuft.

Das Berechnen der Gewichtungen $\vec{g}_{ij}$ wird von der Reglervorrichtung bevorzugt unter Nutzung eines Satzes von linearen Gleichungen in Matrizenform durchgeführt, also z.B. mittels der Gleichung

$$\vec{A} \cdot \vec{g}^T = \vec{E}$$

bei welcher der Punkt eine Matrizenmultiplikation, das hochgestellte "T" eine Matrixtransposition, $\overleftrightarrow{E}$ bei sechs Freiheitsgraden eine 6x6 Einheitsmatrix, $\overleftrightarrow{A}$ eine 6xNg-Matrix mit

$$\bar{A} = \begin{bmatrix} (\bar{r}_{g1})_x & (\bar{r}_{g2})_x & \cdots & (\bar{r}_{gN_s})_x \\ (\bar{r}_{g1})_y & (\bar{r}_{g2})_y & \cdots & (\bar{r}_{gN_s})_y \\ (\bar{r}_{g1})_z & (\bar{r}_{g2})_z & \cdots & (\bar{r}_{gN_s})_z \\ (\bar{p}_{g1} \times \bar{r}_{g1})_x & (\bar{p}_{g2} \times \bar{r}_{g2})_x & \cdots & (\bar{p}_{gN_s} \times \bar{r}_{gN_s})_x \\ (\bar{p}_{g1} \times \bar{r}_{g1})_y & (\bar{p}_{g2} \times \bar{r}_{g2})_y & \cdots & (\bar{p}_{gN_s} \times \bar{r}_{gN_s})_y \\ (\bar{p}_{g1} \times \bar{r}_{g1})_z & (\bar{p}_{g2} \times \bar{r}_{g2})_z & \cdots & (\bar{p}_{gN_s} \times \bar{r}_{gN_s})_z \end{bmatrix}$$

und $\overleftrightarrow{g} = \begin{bmatrix} g_{ij} \end{bmatrix}$ die 6xNg Matrix der zu bestimmenden Gewichtungen bezeichnet. Diese Matrix stellt eine nach der Erfindung zu generierende Aktormatrix oder Sensormatrix dar.

Zum Berechnen der Gewichtungen, werden zweckmäßiger Weise folgende Annahmen getroffen. Besitzt ein zu regelndes Schwingungsisolationssystem sechs Sensoren und sechs Aktoren, z.B. üblicherweise bei einem Schwingungsisolationssystem mit drei Isolatormodulen, sind alle vorbeschriebenen Matrizen 6x6 Matrizen und alle sechs Freiheitsgrade können somit durch das Regelungssystem bei entsprechend geeigneten Anordnungen und Orientierungen der Sensoren und Aktoren grundsätzlich angesprochen werden.

Die Sensormatrix oder Aktormatrix ergibt sich in diesem Fall zu

$$\tilde{g} = \left( \tilde{A}^{-1} \right)^T$$

Häufig jedoch weichen zwei Anordnungen hiervon ab.

A): es sind weniger Sensoren als Freiheitsgrade vorhanden oder es sind einige Sensoren entlang einer gemeinsamen Richtung ausgerichtet, so dass nicht alle Freiheitsgrade mit den Sensoren für den Regler überwacht bzw. erfasst werden können.

B): ergänzend oder alternativ sind mehr Aktoren als Freiheitsgrade vorhanden, so dass für die Aktormatrix keine eindeutige Lösung sondern lediglich eine Anzahl von äquivalenten Lösungen bestimmbar ist.

In beiden Fällen wird jedoch durch an sich bekannte Techniken, wie beispielsweise der Technik der Singulärwertzerlegung (SVD-Singular-Value-Decomposition) eine bestimmte Lösung durch die Verarbeitungseinheit 41 bzw. 43 erzeugt. Eine gemäß der Erfindung bevorzugte Erzeugung einer bestimmten Lösung erfolgt unter Anwendung der allgemeinen funktionalen Verarbeitungsvorschrift

$$\bar{g} = \left[ \bar{V} \cdot \left( \bar{W}^{-1} \right) \cdot \ddot{U}^T \right]^T$$

wobei $\overleftrightarrow{V}$ eine orthogonale nxn Matrix, $\left( \overline{W}^{-1} \right)$ die Inverse einer diagonalen nxn Matrix ist, wobei alle diagonalen Werte $1/w_i$ für $w_i = 0$ zu Null gesetzt sind und $\overleftrightarrow{U}^T$ eine transponierte spaltenorthogonale mxn Matrix ist.

Ist m>n entspricht das vorstehendem Fall A) , wobei jedoch über den SVD-Ansatz der Freiheitsgrad bestimmbar ist, der nicht erfasst werden kann und diese Information zur weiteren Verarbeitung entsprechend für den Anwender nutzbar ist. Ist m<n entspricht das vorstehendem Fall B), wobei über letztere verarbeitungsvorschrift eine bestimmte Lösung berechenbar ist und der vollständige Lösungsraum um diese bestimmte Lösung herum durch die Vektoren definiert ist, die in den Spalten i der Matrix $\overleftrightarrow{V}$, für welche $w_i = 0$ ist, enthalten sind. Für m=n wird die inverse Matrix berechnet und somit eine eindeutige Lösung ermittelt.

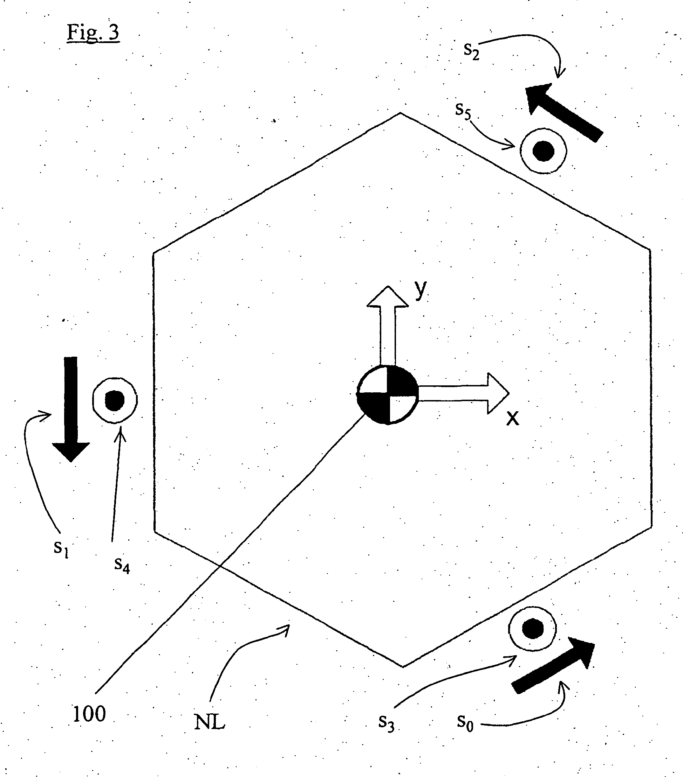

Zur weiteren Verdeutlichung der Erfindung wird nachfolgend der Einfachheit halber zunächst von einer idealisierten Anordnung eines Schwingungsisolationssystems ausgegangen, bei welchem gemäß Figur 3 sechs Sensoren s0 bis s5 in einer im Wesentlichen dreieckigen Anordnung um eine Nutzlast "NL" herum angeordnet sind und zunächst in der Ebene des schwerpunktzentrums liegen. Die Sensoren s0, s1 und s2 sind zur Erfassung von horizontalen Schwingungsanteilen (bzw. Positionen oder Geschwindigkeiten) und die Sensoren s3, s4 und s5 sind zur Erfassung von vertikalen Schwingungsanteilen (bzw. Positionen oder Geschwindigkeiten) angeordnet. In Bezug auf einen fixen Punkt 100 besitzen die der Reglervorrichtung des Systems vorgegebenen Positionen $p_{si}$ der Sensoren si mit i=0 ....5 z.B. folgende x-, y- und z-Achsenanteile:

$$ps0: [x] = 0.5000; \quad ps0: [y] =-0.8660; \quad ps0: [z] = 0.0000;$$
$$ps1: [x] =-1.0000; \quad ps1: [y] = 0.0000; \quad ps1: [z] = 0.0000;$$
$$ps2: [x] = 0.5000; \quad ps2: [y] = 0.8660; \quad ps2; [z] = 0.0000;$$
$$ps3: [x] = 0.5000; \quad ps3: [y] =0.8660; \quad ps3: [z] = 0.0000;$$
$$ps4: [x] =-1.0000; \quad ps4: [y] = 0.0000; \quad ps4: [z] = 0.0000;$$
$$ps5: [x] = 0.5000; \quad ps5: [y] = 0.8660; \quad ps5: [z] = 0.0000;$$

und die Richtungen $r_{sl}$ der Sensoren mit i=1 ...5 z.B. folgende x-, y- und z-Achsenausrichtungen:

$$rs0: [x] = 0.8660; \quad rs0: [y] = 0.5000; \quad rs0:[z] = 0.0000;$$
$$rs1: [x] = 0.0000; \quad rs1: [y] =-1.0000; \quad rs1: [z] = 0.0000;$$
$$rs2: [x] =-0.8660; \quad rs2: [y] = 0.5000; \quad rs2: [4] = 0.0000;$$
$$rs3: [x] = 0.0000; \quad rs3: [y] = 0.0000; \quad rs3: [z] = 1.0000;$$
$$rs4: [x] = 0.0000; \quad rs4: [y] = 0.0000; \quad rs4: [z] = 1.0000;$$
$$rs5: [x] = 0.0000; \quad rs5: [y] = 0.0000; \quad rs5: [z] = 1.0000;$$

Nach Verarbeitung dieser Daten erzeugt die Reglervorrichtung eine Matrix $\overleftrightarrow{A}$ mit folgendem System von linearer Gleichungen:

|     | s0 | s1 | s2 | s3 | s4 | s5 |
|-----|--------|--------|---------|--------|--------|--------|
| XT | 0.8660 | 0.0000 | -0.8660 | 0.0000 | 0.0000 | 0.0000 |
| YT | 0.5000 | -1.0000 | 0.5000 | 0.0000 | 0.0000 | 0.0000 |
| ZR | 1.0000 | 1.0000 | 1.0000 | 0.0000 | 0.0000 | 0.0000 |
| ZT | 0.0000 | 0.0000 | 0.0000 | 1.0000 | 1.0000 | 1.0000 |
| XR | 0.0000 | 0.0000 | 0.0000 | -0.8660 | 0.0000 | 0.8660 |
| YR | 0.0000 | 0.0000 | 0.0000 | -0.5000 | 1.0000 | -0.5000 |

Eine Y-Verschiebung der Nutzlast um einen Betrag $\alpha$ führt somit zu Sensorsignalen der Sensoren s0, s1 und s2 in der Größenordnung von +0,5$\alpha$ -1,0$\alpha$ bzw. +0,5$\alpha$. Entsprechend führt eine X-Rotation der Nutzlast um einen Betrag $\alpha$ zu Sensorsignalen der sensoren s3 und s5 in der Größenordnung von -0,8660$\alpha$ bzw. +0,8660$\alpha$.

Die hierauf basierend berechnete Sensormatrix $\overleftrightarrow{g}$ führt zu den bestimmten Lösungsvektoren:

|     | s0 | s1 | s2 | s3 | s4 | s5 |
|-----|--------|---------|---------|---------|--------|---------|
| XT | 0.5774 | 0.0000 | -0.5774 | 0.0000 | 0.0000 | 0.0000 |
| YT | 0.3333 | -0.6667 | 0.3333 | 0.0000 | 0.0000 | 0.0000 |
| ZR | 0.3333 | 0.3333 | 0.3333 | 0.0000 | 0.0000 | 0.0000 |
| ZT | 0.0000 | 0.0000 | 0.0000 | 0.3333 | 0.3333 | 0.3333 |
| XR | 0.0000 | 0.0000 | 0.0000 | -0.5774 | 0.0000 | 0.5774 |
| YR | 0.0000 | 0.0000 | 0.0000 | -0.3333 | 0.6667 | -0.3333 |

Diese, die bestimmten Lösungsvektoren umfassende Matrix bildet gemäß der Erfindung eine solche Sensorsteuermatrix $\overleftrightarrow{V}_s$ (Fig. 2) zur Regelung des beispielhaften Schwingungsisolationssystems. Folglich werden die jeweiligen Sensorsignale nunmehr bei der Schwingungsisolationsregelung achsenanteilig bei der weiteren Verarbeitung berücksichtigt.

Mit anderen Worten, lautet die Verarbeitungsvorschrift für die Reglervorrichtung, um beispielsweise eine x-Verschiebung zu erfassen, dass die gelieferten Sensorsignale der Sensoren 0 und 2 mit +0,5774 bzw. -0,5774 gewichtet und addiert werden müssen. Diese Verarbeitungsmatrix ist jedoch noch nicht eindeutig, da jede Zeile mit einem beliebigen Faktor multipliziert werden kann und somit nur die relativen Verhältnisse der Sensorsignale zueinander in Bezug auf jeden Freiheitsgrad festgelegt sind.

Wie ferner ersichtlich, sind jedoch die Zeilen der Matrix orthogonal zueinander und die Summe der Produkte der Elemente aus zwei Reihen hebt sich also auf, welches anzeigt, dass die Freiheitsgrade für die Regelungsstrecken voneinander entkoppelt sind. Im vorliegenden Beispielfall jedoch noch unter der zunächst angenommen Voraussetzung, dass die Nutzlast "NL" selbsttragend und keine mit dieser verbundenen Steifigkeiten besitzt.

Ferner sind die horizontalen und die vertikalen Freiheitsgrade voneinander entkoppelt, so dass, wenn die Matrix wie vorstehend dargestellt gruppiert ist, aus zwei 3x3 Matrizen besteht, während alle anderen Elemente, welche horizontale Freiheitsgrade mit vertikal ausgerichteten Sensoren oder umgekehrt koppeln würden, Null sind. Das ist das Ergebnis der bei Fig. 3 gezeigten speziellen Systemanordnung, wenn alle Sensoren in der Ebene des Schwerpunktes angeordnet sind. Liegt der Schwerpunkt außerhalb der Sensorebene, oder sind nicht alle Sensoren auf der gleichen Höhe angeordnet, ändert sich das. Um diese Änderung zu verdeutlichen und die Anwendung der Erfindung auch auf entsprechend modifizierte Schwingungssysteme darzulegen, wird nachfolgend von einem dahingehend abgewandelten Schwingungsisolationssystem ausgegangen, bei welchem der Schwerpunkt z.B. 50cm oberhalb der Sensorebene angeordnet ist und sich dementsprechend die einzelnen einzugebenden Sensordaten, insbesondere in Bezug auf die z-Achse, ändern.

Nach Verarbeitung der entsprechend modifiziert vorgegebenen Positions- und Orientierungsdaten wird für diesen abgewandelten Fall eine Matrix $\overleftrightarrow{A}$ mit folgendem System von linearen Gleichungen erzeugt:

|    | s0      | s1      | s2      | s3      | s4     | s5      |
|----|---------|---------|---------|---------|--------|---------|
| XT | 0.8660  | 0.0000  | -0.8660 | 0.0000  | 0.0000 | 0.0000  |
| YT | 0.5000  | -1.000  | 0.5000  | 0.0000  | 0.0000 | 0.0000  |
| ZR | 1.0000  | 1.0000  | 1.0000  | 0.0000  | 0.0000 | 0.0000  |
| ZT | 0.0000  | 0.0000  | 0.0000  | 1.0000  | 1.0000 | 1.0000  |
| XR | 0.2500  | -0.5000 | 0.2500  | -0.8660 | 0.0000 | 0.8660  |
| YR | -0.4330 | 0.0000  | 0.4330  | -0.5000 | 1.0000 | -0.5000 |

Wie ersichtlich, führt nunmehr z.B. eine X-Rotation der Nutzlast um einen Betrag $\alpha$ zu Sensorsignalen der Sensoren s0, s1, s2, s3 und s5 in der Größenordnung von +0.2500$\alpha$, -0.5000$\alpha$, +0.2500$\alpha$, -0,8660$\alpha$ bzw. +0,8660$\alpha$.

Die hierauf berechnete, modifizierte Sensorsteuermatrix $\overleftrightarrow{g}$ führt zu den bestimmten Lösungsvektoren:

|    | s0     | s1      | s2      | s3      | s4     | s5      |
|----|--------|---------|---------|---------|--------|---------|
| XT | 0.5774 | 0.0000  | -0.5774 | -0.1667 | 0.3333 | -0.1667 |
| YT | 0.3333 | -0.6667 | 0.3333  | 0.2887  | 0.0000 | -0.2887 |
| ZR | 0.3333 | 0.3333  | 0.3333  | 0.0000  | 0.0000 | 0.0000  |
| ZT | 0.0000 | 0.0000  | 0.0000  | 0.3333  | 0.3333 | 0.3333  |
| XR | 0.0000 | 0.0000  | 0.0000  | -0.5774 | 0.0000 | 0.5774  |
| YR | 0.0000 | 0.0000  | 0.0000  | -0.3333 | 0.6667 | -0.3333 |

Mit anderen Worten, lautet die modifizierte Verarbeitungsvorschrift für das Regelungssystem, um beispielsweise eine X-Verschiebung zu erfassen, nunmehr, dass die gelieferten Sensorsignale der Sensoren 0, 2, 3, 4 und 5 mit +0,5774, -0,5774, -0,1667, +0.3333 bzw. -0.1667 gewichtet und addiert werden. Ferner ist ersichtlich, dass bei der Signalverarbeitung nur in Bezug auf die horizontalen Freiheitsgrade entlang der x- und y-Achse eine Korrektur durchgeführt werden muss.

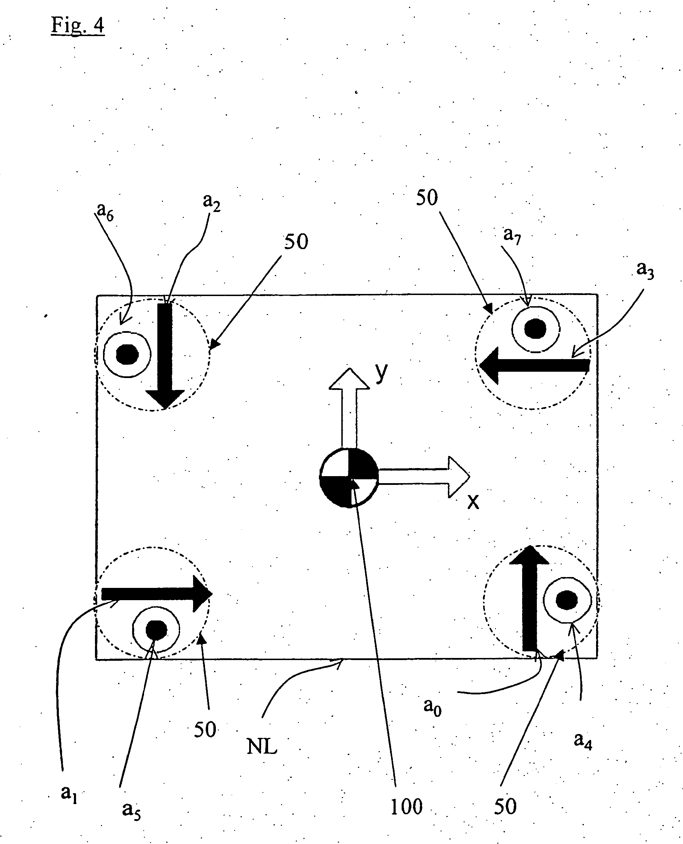

Zur nachfolgenden Beschreibung der Erzeugung und weiteren Verarbeitung einer beispielhaften Aktorsteuermatrix gemäß der Erfindung wird wiederum der Einfachheit halber von einer weiteren idealisierten Anordnung eines Schwingungsisolationssystems ausgegangen, bei welchem gemäß Figur 4 acht Aktoren a0 bis ä7 in einer im Wesentlichen rechtwinkligen Anordnung unter einer Nutzlast "NL" angeordnet sind und in der Ebene des Schwerpunktzentrums liegen. Ferner sind die Aktoren a0 und a4, a1 und a5, a2 und a6 sowie a3 und a7 jeweils bei oder innerhalb einem, z.B. im Zentrum von einem von vier Isolatormodulen 50 angeordnet, welche die Nutzlast lagern, wobei die Aktoren a0, a1, a2 und a3 zur Beaufschlagung von horizontalen Kräften und die Aktoren a4, a5, a6 und a7 zur Beaufschlagung von vertikalen Kräften ausgerichtet sind. Wiederum in Bezug auf einen fixen Punkt 100 besitzen die der Reglervorrichtung des Systems vorgegebenen Positionen $p_{ai}$ der Aktoren ai mit i=0 ...7 z.B. folgende x-, y- und z-Achsenanteile:

$$pa0: [x] = 1.50; \quad pa0: [y] = -1.00; \quad pa0: [z] = 0.0;$$

(fortgesetzt)

pa1:[x] =-1.50;    pa1: [y] =-1.00;    pa1: [z] = 0.0;
pa2:[x] =-1.50;    pa2: [y] = 1.00;    pa2: [z] = 0.0;
pa3:[x] = 1.50;    pa3: [y] = 1.00;    pa3: [z] = 0.0;
pa4:[x] = 1.50;    pa4: [y] =-1.00;    pa4: [z] = 0.0;
pa5:[x] =-1.50;    pa5: [y] =-1.00;    pa5: [z] = 0.0;
pa6:[x] =-1.50;    pa6: [y] = 1.00;    pa6: [z] = 0.0;
pa7:[x] = 1.50;    pa7: [y] = 1,00;    pa7: [z] = 0.0;

und die Richtungen $r_{al}$ der Aktoren mit i=0 ...7 z.B.
folgende x-, y- und z-Achsenanteile:

ra0:[x] = 0.0;    ra0:[y] = 1.0;    ra0:[z] = 0.0;
ra1:[x] = 1.0;    ra1:[y] = 0.0;    ra1:[z] = 0.0;
ra2:[x] = 0.0;    ra2:[y] = -1.0;    ra2:[z] = 0.0;
ra3:[x] = -1.0;    ra3:[y] = 0.0;    ra3:[z] = 0.0;
ra4:[x] = 0.0;    ra4:[y] = 0.0;    ra4:[z] = 1.0;
ra5:[x] = 0.0;    ra5:[y] = 0.0;    ra5:[z] = 1.0;
ra6:[x] = 0.0;    ra6:[y] = 0.0;    ra6:[z] = 1.0;
ra7;[X] = 0.0;    ra7:[y] = 0.0;    ra7:[z] = 1.0;

Nach Verarbeitung dieser Daten wird sodann eine Matrix $\overleftrightarrow{A}$ mit folgendem System von linearer Gleichungen generiert:

| | a0 | a1 | a2 | a3 | a4 | a5 | a6 | a7 |
|---|---|---|---|---|---|---|---|---|
| XT | 0.0000 | 1.0000 | 0.0000 | -1.0000 | 0.0000 | 0.0000 | 0.0000 | 0.0000 |
| YT | 1.0000 | 0.0000 | -1.0000 | 0.0000 | 0.0000 | 0.0000 | 0.0000 | 0.0000 |
| ZR | 1.5000 | 1.0000 | 1.5000 | 1.0000 | 0.0000 | 0.0000 | 0.0000 | 0.0000 |
| ZT | 0.0000 | 0.0000 | 0.0000 | 0.0000 | 1.0000 | 1.0000 | 1.0000 | 1.0000 |
| XR | 0.0000 | 0.0000 | 0.0000 | 0.0000 | -1.0000 | -1.0000 | 1.0000 | 1.0000 |
| YR | 0.0000 | 0.0000 | 0.0000 | 0.0000 | -1.5000 | 1.5000 | 1.5000 | -1.5000 |

Eine Verschiebung der Nutzlast in Y-Richtung um einen Betrag $\alpha$ resultiert somit aus Aktorsignalen der Aktoren a0 oder a2 in der Größenordnung von +1,0$\alpha$ bzw. -1,0$\alpha$. Entsprechend resultiert eine Kraftbeaufschlagung der Nutzlast für eine X-Rotation um einen Betrag $\alpha$ aus Aktorsignalen der Aktoren a4, a5, a6 oder a7 in der Größenordnung von -1,0$\alpha$, -1,0$\alpha$, +1,0$\alpha$ bzw. +1,0$\alpha$.

Eine hierauf berechnete Aktormatrix $\overleftrightarrow{g}$ führt zu den bestimmten Lösungsvektoren:

| | a0 | a1 | a2 | a3 | a4 | a5 | a6 | a7 |
|---|---|---|---|---|---|---|---|---|
| XT | 0.0000 | 0.5000 | 0.0000 | -0.5000 | 0.0000 | 0.0000 | 0.0000 | 0.0000 |
| YT | 0.5000 | 0.0000 | -0.5000 | 0.0000 | 0.0000 | 0.0000 | 0.0000 | 0.0000 |
| ZR | 0.2308 | 0.1538 | 0.2308 | 0.1538 | 0.0000 | 0.0000 | 0.0000 | 0.0000 |
| 2T | 0.0000 | 0.0000 | 0.0000 | 0.0000 | 0.2500 | 0.2500 | 0.2500 | 0.2500 |
| XR | 0.0000 | 0.0000 | 0.0000 | 0.0000 | -0.2500 | -0.2500 | 0.2500 | 0.2500 |
| YR | 0.0000 | 0.0000 | 0.0000 | 0.0000 | -0.1667 | 0.1667 | 0.1667 | -0.1667 |

Diese, die bestimmten Lösungsvektoren umfassende Matrix bildet nunmehr gemäß der Erfindung eine Aktor-steuermatrix $\overleftrightarrow{g}_a$ (Fig. 2) für die Regelung des beispielhaften Schwingungsisolationssystems. Folglich können auch die jeweiligen Aktorstellsignale bei der Schwingungsisolationsregelung wiederum achsenanteilig entsprechend berücksichtigt werden.

Mit anderen Worten, lautet die Verarbeitungsvorschrift für die Reglervorrichtung, um beispielsweise eine Kraftbeaufschlagung für eine Verschiebung in x-Richtung gemäß eines durch die Einheit 42 der Fig. 2 entsprechend berechneten Achsenausgangssignals zu bewirken, dass diese über zu erzeugende, mit +0,5 und -0,5 gewichtete Aktor-Stellsignale der Aktoren 1 bzw. 3 verteilt werden muss. Unter Berücksichtigung der vorangegangenen Beschreibung und wie ersichtlich, ist diese Matrix $\overleftrightarrow{g}_a$ nicht eindeutig und jede Linearkombination der Vektoren

| 0.3922 | -0.5883 | 0.3922 | -0.5883 | 0.0000 | 0.0000 | 0.0000 | 0.0000 |
|--------|---------|--------|---------|--------|--------|--------|--------|
| 0.0000 | 0.0000 | 0.0000 | 0.0000 | -0.5000 | 0.5000 | -0.5000 | 0.5000 |

kann z.B. zu jeder Zeile dieser Matrix $\overleftrightarrow{g}$ addiert werden kann, so dass zusammen mit der bestimmten Lösung ein 2-dimensionaler Lösungsraum ausgegeben wird.

Um hierauf basierend weitere Lösungsmatrizen zu generieren und eine weitere gültige Lösung zu berechnen, schlägt die Erfindung z.B. folgenden Weg vor:

Erstens wird der erste Vektor des Lösungsraums nach Multiplikation mit dem Faktor 0.1538/0.5883 zur ZR-Zeile addiert und zweitens werden anschließend die ZR-Zeile und die YR-Zeile normalisiert, so dass die Summe der absoluten Werte in jeder Zeile dem Wert "1" entspricht.

Somit ergeben sich Lösungsvektoren in Matrizenform:

|    | a0 | a1 | a2 | a3 | a4 | a5 | a6 | a7 |
|----|------|------|------|------|------|------|------|------|
| XT | 0.0000 | 0.5000 | 0.0000 | -0.5000 | 0.0000 | 0.0000 | 0.0000 | 0.0000 |
| YT | 0.5000 | 0.0000 | -0.5000 | 0.0000 | 0.0000 | 0.0000 | 0.0000 | 0.0000 |
| ZR | 0.5000 | 0.0000 | 0.5000 | 0.0000 | 0.0000 | 0.0000 | 0.0000 | 0.0000 |
| ZT | 0.0000 | 0.0000 | 0.0000 | 0.0000 | 0.2500 | 0.2500 | 0.2500 | 0.2500 |
| XR | 0.0000 | 0.0000 | 0.0000 | 0.0000 | -0.2500 | -0.2500 | 0.2500 | 0.2500 |
| YR | 0.0000 | 0.0000 | 0.0000 | 0.0000 | -0.2500 | 0.2500 | 0.2500 | -0.2500 |

Diese Aktorsteuermatrix ist im Wesentlichen für jede Anordnung gemäß Fig. 4 und unabhängig der Abmessungen der Nutzlast gültig, sofern alle Aktoren in der Ebene des Schwerpunktes angeordnet sind. Liegt der Schwerpunkt wiederum außerhalb der Aktorebene, kann diese Änderung in entsprechender Weise wie in Bezug auf Fig. 3 beschrieben berücksichtigt werden, so dass eine entsprechend modifizierte Aktorsteuermatrix berechnet und bei der Regelung zur Schwingungsisolation angewendet wird.

Die Erfindung ermöglicht somit die Berechnung von Sensor-und Aktorsteuermatrizen bei Entkopplung der kartesischen Achsenanteile und bei im wesentlichen beliebiger Schwerpunktanordnung, wobei vorstehend zunächst die Annahme getroffen wurde, dass an der Nutzlast keine passiven Isolationselemente oder -module, wie z.B. Feder/Dämpfer-Kombinationen aus Gummi, Luftfedern, Stahlfedern und dergleichen zur passiven Schwingungsdämpfung angeordnet sind, die eine bestimmte Steifigkeit besitzen.

Da jedoch die Nutzlast üblicherweise auch mit passiven Isolatoren, die eine bestimmte Steifigkeit besitzen, verbunden ist, sind in diesen Fällen die Freiheitsgrade der Nutzlast weiterhin miteinander gekoppelt.

Die Erfindung sieht daher in weiterer Ausbildung zur nochmaligen Verbesserung der Regelungsgüte vor, die sechs Starrkörper-Eigenmoden des dynamischen Systems bestehend aus der Nutzlast und den daran befestigten passiven Isolatoren zu bestimmen. Die hierzu gemäß nachfolgender Beschreibung durch die Reglervorrichtung berechneten weiteren Vektoren zur Erfassung dieser zusätzlichen schwingenden Eigenmoden werden in Abgrenzung zu den kartesischen Koordinaten in entsprechende Modalkoordinaten verarbeitet.

Für diese weitere Berechnung wird zunächst von einem Starrkörper mit einer Masse m und den Hauptträgheitsmomenten $I_{xx}$, $I_{yy}$ und $I_{zz}$ ausgegangen. Der Starrkörper wird z.B. durch eine Anzahl $N_{IM}$ von passiven Isolationsmodulen mit einer jeweiligen Steifigkeit $k_i$ (i=1 ... $N_{1M}$) gelagert, wobei diese Isolationsmodule in Bezug auf den Schwerpunkt an den Stellen $\vec{r}_i$ (i=1 ... $N_{IM}$) befestigt sind und sich in die Richtung $\vec{R}_i$ (i=1 ... $N_{IM}$) erstrecken. Bei geringer Verschiebung des Starrkörpers aus dessen Gleichgewichtslage erfährt dieser von dem i-ten passiven Isolationsmodul eine Rückstellkraft von

$$\dot{f}_i = -k_i \ddot{R}_i \left( \bar{x} \cdot \bar{R}_i + \bar{\theta} \cdot \left[ \ddot{R}_i \times \bar{r}_i \right] \right)$$

und ein Rückstellmoment von

$$\bar{\tau}_i = -k_i \left[ \bar{R}_i \times \bar{r}_i \right] \left( \ddot{x} \cdot \dot{R}_i + \bar{\theta} \cdot \left[ \bar{R}_i \times \ddot{r}_i \right] \right),$$

wobei $\tilde{x} = (x, y, z)^T$ eine kleine translatorische Verschiebung und $\vec{\theta} = (\theta_x, \theta_y, \theta_z)^T$ eine kleine Rotation jeweils in Vektorform repräsentiert.

zusammengefasst, ergibt sich in verallgemeinerter Form somit ein sechsdimensionaler Kraftvektor

$$\vec{F} = \sum_{i=1}^{N_{RM}} \begin{bmatrix} \vec{f}_i \\ \vec{\tau}_i \end{bmatrix} ,$$

und ein verschiebungsvektor

$$\vec{X} = \begin{bmatrix} \dot{x} \\ \vec{\theta} \end{bmatrix} ,$$

so dass sich die von solchen passiven Isolationsmodulen auf den Starrkörper ausgeübte verallgemeinerte Rückstellkraft mit

$$\vec{F} = -\vec{K} \cdot \vec{X}$$

beschreiben lässt, wobei

$$\vec{K} = \sum_i k_i \begin{bmatrix} R_{xx}^2 & R_{xx}R_{yx} & R_{xx}R_{zx} & R_{xx}(\vec{R}_i \times \vec{r}_i)_x & R_{xx}(\vec{R}_i \times \vec{r}_i)_y & R_{xx}(\vec{R}_i \times \vec{r}_i)_z \\ R_{yx}R_{xx} & R_{yx}^2 & R_{yx}R_{zx} & R_{yx}(\vec{R}_i \times \vec{r}_i)_x & R_{yx}(\vec{R}_i \times \vec{r}_i)_y & R_{yx}(\vec{R}_i \times \vec{r}_i)_z \\ R_{zx}R_{xx} & R_{zx}R_{yx} & R_{zx}^2 & R_{zx}(\vec{R}_i \times \vec{r}_i)_x & R_{zx}(\vec{R}_i \times \vec{r}_i)_y & R_{zx}(\vec{R}_i \times \vec{r}_i)_z \\ R_{xx}(\vec{R}_i \times \vec{r}_i)_x & R_{yx}(\vec{R}_i \times \vec{r}_i)_x & R_{zx}(\vec{R}_i \times \vec{r}_i)_x & (\vec{R}_i \times \vec{r}_i)_x^2 & (\vec{R}_i \times \vec{r}_i)_x(\vec{R}_i \times \vec{r}_i)_y & (\vec{R}_i \times \vec{r}_i)_x(\vec{R}_i \times \vec{r}_i)_z \\ R_{xx}(\vec{R}_i \times \vec{r}_i)_y & R_{yx}(\vec{R}_i \times \vec{r}_i)_y & R_{zx}(\vec{R}_i \times \vec{r}_i)_y & (\vec{R}_i \times \vec{r}_i)_x(\vec{R}_i \times \vec{r}_i)_y & (\vec{R}_i \times \vec{r}_i)_y^2 & (\vec{R}_i \times \vec{r}_i)_y(\vec{R}_i \times \vec{r}_i)_z \\ R_{xx}(\vec{R}_i \times \vec{r}_i)_z & R_{yx}(\vec{R}_i \times \vec{r}_i)_z & R_{zx}(\vec{R}_i \times \vec{r}_i)_z & (\vec{R}_i \times \vec{r}_i)_x(\vec{R}_i \times \vec{r}_i)_z & (\vec{R}_i \times \vec{r}_i)_y(\vec{R}_i \times \vec{r}_i)_z & (\vec{R}_i \times \vec{r}_i)_z^2 \end{bmatrix}$$

eine symmetrische 6x6 Steifigkeitsmatrix ist.

Ferner wird eine Massenmatrix gemäß

$$\vec{M} = \begin{bmatrix} m & 0 & 0 & 0 & 0 & 0 \\ 0 & m & 0 & 0 & 0 & 0 \\ 0 & 0 & m & 0 & 0 & 0 \\ 0 & 0 & 0 & I_{xx} & 0 & 0 \\ 0 & 0 & 0 & 0 & I_{yy} & 0 \\ 0 & 0 & 0 & 0 & 0 & I_{zz} \end{bmatrix}$$

mit in die Berechnung der Reglervorrichtung einbezogen, so dass die berechnete Bewegungsgleichung für das passive freie System, d.h. unter Vernachlässigung von Reibungsdämpfung, lautet:

$$\vec{M} \cdot \ddot{\vec{X}} + \vec{K} \cdot \vec{X} = 0 ,$$

welche unter Anwendung der Fouriertransfomation zu $(\vec{M}^{-1}\vec{K}) = \omega^2 \vec{X}$ weiterverarbeitet wird, wobei die Matrix

$\ddot{M}^{-1}\tilde{K}$  üblicherweise nicht symmetrisch ist, $\vec{X}$ die zu bestimmenden Eigenvektoren in Modalkoordinaten enthält und $\omega^2$ die zu den passiven Resonanzfrequenzen für diese Moden korrespondierenden Eigenwerte sind.

Durch geeignete, computergestützte Berechnungsroutinen können somit die Eigenvektoren $\vec{X}$ zusammen mit deren Resonanzfrequenzen berechnet werden.

Basierend auf dem den kartesischen Freiheitsgraden zugrundeliegenden Koordinatensystem sind die Eigenvektoren zunächst jeweils in der Form  $\vec{c} = \left(x, y, z, \theta_x, 0_y, \theta_z\right)^T$  gegeben. Für eine Transformation solcher auf den kartesischen Freiheitsgraden basierten Eigenvektoren in die Sensor- und Aktorsteuermatrizen, wird gemäß Erfindung die sogenannte Modaltransformation durchgeführt, wie nachfolgend beschrieben.

Hierbei wird davon ausgegangen, dass eine Matrix $\vec{V}$, in deren Spalten die sechs Eigenvektoren in kartesischen Koordinaten enthalten sind, zusätzlich die Transformationsmatrix zwischen einem auf den kartesischen Koordinaten basierten Vektor $\vec{c}$ und einem auf den Modalkoordinaten basierten Vektor $\vec{m}$ bildet, d.h.:  $\vec{c} = \vec{V} \cdot \vec{m}$ .

Zur Bestimmung der Transformation für die verallgemeinerten Kräfte wird $\vec{X}$ in obiger Gleichung

$$\tilde{M} \cdot \ddot{\vec{X}} + \tilde{K} \cdot \ddot{\vec{X}} = 0$$  nunmehr durch  $\vec{c}$  ersetzt und zusätzlich eine externe Kraft  $\vec{F}$  addiert, d.h.:

$$\tilde{M} \cdot \vec{V} \cdot \ddot{\vec{m}} + K \cdot \vec{V} \cdot \vec{m} = \vec{F} .$$

Die Transformation in den Modalraum ist nach Multiplikation vorstehender Gleichung mit $\vec{V}^T$ von links vervollständig, wobei das Ergebnis lautet:

$$\vec{V}^T \cdot \tilde{M} \cdot \vec{V} \cdot \ddot{\vec{m}} + \vec{V}^T \cdot \tilde{K} \cdot \vec{V} \cdot \vec{m} = \vec{V}^T \cdot \vec{F} .$$  Hierüber können folglich die transformierten (diagonalen) Massen- und Steifigkeitsmatrizen sowie die Modalkräfte  $\vec{F}_m = \vec{V}^T \cdot \vec{F}$  in die Regelung zur Schwingungsisolation miteinbezogen werden können.

Nachfolgend wird die Sensormatrix wiederum mit $\overleftrightarrow{g}_s$ und die Aktormatrix mit $\overleftrightarrow{g}_a$ gekennzeichnet. Ähnlich zu den zuvor beschriebenen Transformationen werden diese Matrizen wieder zur Transformation von auf den kartesischen Koordinaten basierten Vektoren $\vec{c}$ und Kräften $\vec{F}$ in Sensormesswerte $\vec{s}$ bzw. Aktorkräfte $\vec{F}_a$ eingesetzt, also gemäß:

$$\vec{s} = \tilde{g}_s^T \cdot \vec{c}  \quad \text{und} \quad \vec{F}_a = \tilde{g}_a^T \cdot \vec{F} .$$  Jetzt ist erfindungsgemäß folglich zusätzlich gewährleistet, dass auch modale Koordinaten zu Sensorkoordinaten und Aktorkoordinaten transformiert werden, und zwar durch: $\vec{s} = \vec{g}_s^T \cdot \vec{V} \cdot \vec{m}$

bzw.  $\vec{F}_a = \vec{g}_a^T \cdot \vec{V}^{-T} \cdot \vec{F}_m$ ,  wobei das hochgestellte "-T" für die transponierte inverse Matrix steht.

In Folge werden somit die zunächst beschriebenen berechneten Sensor- und Aktorsteuermatrizen $\overleftrightarrow{g}_s$ bzw. $\overleftrightarrow{g}_a$ zu den zur weiteren Modalentkopplung effektiven Sensor- und Aktorsteuexmatrizen $\overleftrightarrow{g}_{s\_eff}$ bzw. $\overleftrightarrow{g}_{a\_eff}$ verarbeitet, und zwar über die funktionale Verarbeitungsvorschrift  $\vec{g}_{s\_eff} = \vec{V}^T \cdot \vec{g}_s$  bzw.  $\vec{g}_{a\_eff} = \vec{V}^{-1} \cdot \vec{g}_a .$

Ein Regelungssystem und eine Reglervorrichtung nach der Erfindung verarbeiten somit für jedes gegebene aktive Schwingungsisolationssystem mit im Wesentlichen beliebiger Geometrie bei sechs zu berücksichtigenden Freiheitsgraden sechs einzelne von einander entkoppelte Regelungsschleifen.

Jeder Freiheitsgrad bzw. jede entlang einer Achse verlaufende Bewegung einer in Bezug auf Schwingungen zu isolierenden Masse kann somit unabhängig voneinander geregelt werden ohne, dass zusätzliche Berechnungen zur Kompensation von Querkopplungen in den einzelnen Regelstrecken zu berücksichtigen sind.

Die für die Erfindung notwendigen Berechnungsalgorithmen, Matrizen- und Vektoroperationen werden zweckmäßig durch Software der Reglervorrichtung implementiert und ermöglichen in Folge auch eine Selbsteinstellung des gesamten Regelungssystems vor der eigentlichen Reglung.

In Bezug auf eine für das erfindungsgemäße Regelungssystem bevorzugte Geometrie von Isolatormodulen wird diesbezüglich auf die vom selben Anmelder am 20. Dezember 2006 eingereichten Europäischen Patentanmeldung mit dem Aktenzeichen 06 026 425 verwiesen.

Ein solches bevorzugtes Isolatormodul oder Federsystem zur Schwingungsisolation und/oder zur Dämpfung, welches somit insbesondere ein vertikal und/oder horizontal wirksames Luftlager ist, umfasst folglich eine Basisplatte, ein Zwischenteil, das auf der Basisplatte beweglich angeordnet ist und sich, insbesondere im Betriebszustand, horizontal und/oder vertikal zu dieser bewegen kann und einen Kolben, der innerhalb des zwischenteils beweglich angeordnet ist und eine Last trägt, die gegenüber der Basisplatte in horizontaler und/oder vertikaler Richtung schwingungsisoliert und/oder gedämpft gestützt werden soll. Um bei möglichst geringem Bauraum des Federsystems eine möglichst große Traglast des Federsystems erreichen zu können, welche durch den Durchmesser des Kolbens mitbestimmt ist und um eine möglichst geringe Wandstärke wählen zu können, ist bei dem Federsystem der Durchmesser der Oberseite des Kolbens zu der Wandstärke des Zwischenteils in einem Verhältnis von 10 bis 36 oder bevorzugt von 10 bis 16, in einer besonders bevorzugten Ausführungsform in einem Verhältnis von 10,7 bis 15,1. Ein solches, durch vorstehend in Bezug genommene Patentanmeldung im einzelnen und detailliert beschriebenes Federsystem im Rahmen der Erfindung besitzt Eigenmoden in Abhängigkeit der Massenverteilung, die in der Größenordnung von 0.1Hz bis 10Hz, 0.2 bis 5Hz bzw. 0.5 bis 1.5Hz liegen.

Ein bevorzugte Ausführungsform eines Regelungssystems im Rahmen der Erfindung umfasst folglich ferner eine Druckluftversorgung mit einem zur Verfügung stehenden Volumenstrom für das gesamte System, mindestens ein elektropneumatisches Servoventil, welches den Druck innerhalb des Isolators modulieren kann, mit dem Ziel, die Isolatorausfederung auf einen Sollwert zu regeln und mindestens eine Volumenstromdrossel zwischen dem Servoregelventil und dem Isolatorluftvolumen. Ferner beinhaltet das Schwingungsisolationssystem mindestens einen elektrodynamischen oder elektromagnetischen Linearaktor zur Erzeugung von Relativkräften zwischen Boden und gelagerter bzw. isolierter Masse, so dass die mit dem erfindungsgemäßen Regelungssystem gewonnenen Signale nach vorbeschriebener Weiterbearbeitung der Sensorsignale in Ausgängen zu den Servoventilen zur Modulation des Lagerinnendruckes und/oder in Ausgängen zu den Linearaktoren benutzt werden.

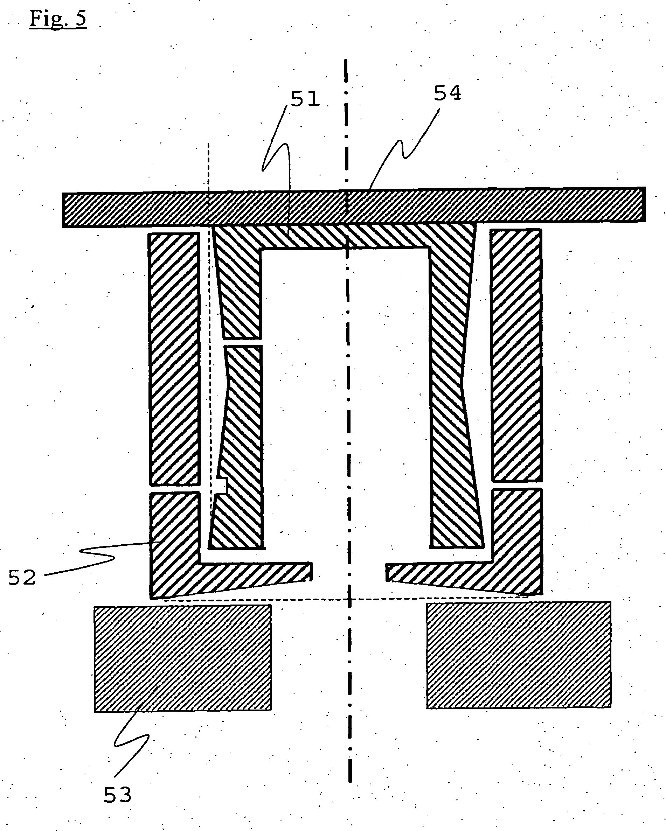

Fig. 5 zeigt eine stark vereinfachte schematische Darstellung eines solchen bevorzugten Isolatormoduls im Rahmen der Erfindung. Das Federsystem umfasst erfindungsgemäß eine Basisplatte 53, ein Zwischenteil 52 und einen Kolben 51. Das Zwischenteil 52 ist auf der Basisplatte 53 angeordnet und insbesondere im Betriebszustand, d.h. bei eingeschaltetem Luftstrom, gegenüber der Basisplatte 53 beweglich und kann sich horizontal und vertikal zu dieser bewegen. Der Kolben 51 ist innerhalb des Zwischenteils 52 beweglich angeordnet und trägt, insbesondere im Betriebszustand, eine auf ihm angeordnete Last 54. Die Basisplatte 53 ist vorzugsweise ihrerseits mit einer Haltevorrichtung verbunden oder in bzw. auf einem Gestellsystem angeordnet. Um Wiederholungen zu vermeiden wird in Bezug auf die weiteren Einzelheiten auf die vorstehende Europäische Patentanmeldung mit dem Aktenzeichen 06 026 425 verwiesen.

**Patentansprüche**

1.  Regelungssystem zur aktiven Schwingungsisolation einer gelagerten Nutzlast, welches eine Anzahl von Schwingungssignalgebern bzw. Sensoren zur Lieferung von Sensorsignalen, eine Anzahl von Aktoren zur Schwingungsunterdrückung und eine Reglervorrichtung zur Verarbeitung der Sensorsignale in Aktor-Stellsignale umfasst, **dadurch gekennzeichnet, daß** die Reglervorrichtung (4) eine Verarbeitung von Positionsdaten und Orientierungsdaten aller zur Verfügung stehenden Sensoren zu einer Sensorsteuermatrix $(\vec{\vec{g}}_s)$ und eine Verarbeitung von Positionsdaten und Orientierungsdaten aller zur Verfügung stehenden Aktoren zu einer Aktorsteuermatrix $(\vec{\vec{g}}_a)$ durchführt, und zwar zur nachfolgenden Berechnung von Achseneingangssignalen in orthogonalen Freiheitsgraden aus den Sensorsignalen und der Sensorsteuermatrix, von Achsenausgangssignalen in orthogonalen Freiheitsgraden zur Schwingungsunterdrückung aus den Achseneingangssignalen und zur Berechnung aus den Achsenausgangssignalen und der Aktorsteuermatrix von entsprechend gewichteten Aktor-Stellsignalen.

2.  Regelungssystem nach vorstehendem Anspruch, wobei die Nutzlast mittels wenigstens einem Isolatormodul, insbesondere einem vertikal und horizontal wirksamen Luftlager, gelagert ist, welches

    - eine Basisplatte (53);
    - ein Zwischenteil (52), das auf der Basisplatte (53) beweglich angeordnet ist; und
    - einen Kolben (51) umfasst, der innerhalb des Zwischenteils (52) beweglich angeordnet ist und die Last (54) trägt, die gegenüber der Basisplatte (53) in horizontaler und vertikaler Richtung schwingungsisoliert gestützt werden soll, wobei der Durchmesser der Oberseite des Kolbens (51) zu der Wandstärke des Zwischenteils (52) in einem Verhältnis von 10 bis 36, bevorzugt von 10 bis 16, besonders bevorzugt von 10,7 bis 15,1 steht.

3.  Regelungssystem nach einem der vorstehenden Ansprüche, mit Verarbeitungseinheiten (41, 43), welche aus einzugebenden Positionsdaten und Orientierungsdaten der Sensoren und Aktoren eine Matrix der Form

$$\bar{A} = \begin{bmatrix} (\bar{r}_{g1})_x & (\bar{r}_{g2})_x & \cdots & (\bar{r}_{gN_g})_x \\ (\bar{r}_{g1})_y & (\bar{r}_{g2})_y & \cdots & (\bar{r}_{gN_g})_y \\ (\bar{r}_{g1})_z & (\bar{r}_{g2})_z & \cdots & (\bar{r}_{gN_g})_z \\ (\bar{p}_{g1} \times \bar{r}_{g1})_x & (\bar{p}_{g2} \times \bar{r}_{g2})_x & \cdots & (\bar{p}_{gN_g} \times \bar{r}_{gN_g})_x \\ (\bar{p}_{g1} \times \bar{r}_{g1})_y & (\bar{p}_{g2} \times \bar{r}_{g2})_y & \cdots & (\bar{p}_{gN_g} \times \bar{r}_{gN_g})_y \\ (\bar{p}_{g1} \times \bar{r}_{g1})_z & (\bar{p}_{g2} \times \bar{r}_{g2})_z & \cdots & (\bar{p}_{gN_g} \times \bar{r}_{gN_g})_z \end{bmatrix}$$

generieren, wobei Ng die Anzahl von Sensoren oder Aktoren, $\vec{p}_{g1}$ die jeweiligen Positionen und $\vec{r}_{gi}$ die jeweiligen Orientierungen in Bezug auf einen fixen Bezugspunkt des aus der gelagerten Nutzlast und Isolatormodulen bestehenden dynamischen Systems repräsentieren, und hierauf basierend eine Sensorsteuermatrix zur Entkopplung der Achseneingangssignale bzw. eine Aktorsteuermatrix zur Aufteilung der berechneten entkoppelten Achsenausgangssignale auf Aktor-Stellsignale in der Form $\overleftrightarrow{g}=[g_{ij}]$ generieren, und mit $g_{ij}$ der Orientierung des i-ten Sensors oder Aktors entsprechend das jeweilige Sensorsignal bzw. Aktor-Stellsignale in Bezug auf den j-ten kartesischen Freiheitsgrad anteilsmäßig gewichtet verarbeiten.

4.  Regelungssystem nach vorstehendem Anspruch, bei welchem die verarbeitungseinheiten mittels einer Singulärwertzerlegung bestimmte Lösungsvektoren der Sensorsteuermatrix bzw. der Aktorsteuermatrix berechnen.

5.  Regelungssystem nach einem der vorstehenden Ansprüche, bei welchem die Reglervorrichtung eine Berechnung der Starrkörper-Eigenmoden des aus der gelagerten Nutzlast und Isolatormodulen bestehenden dynamischen Systems durchführt, und zwar basierend auf Eingabedaten, welche die Masse und die Hauptträgheitsmomente des Starrkörpers, die Anzahl von passiven Isolationsmodulen, deren jeweilige Steifigkeit sowie deren Position und Richtung in Bezug auf den Schwerpunkt beschreiben.

6.  Regelungssystem nach vorstehendem Anspruch, bei welchem die Regelungsvorrichtung zur Berechnung der Eigenvektoren des dynamischen Systems in Modalkoordinaten ausgebildete Verarbeitungseinheiten (41, 43) umfasst.

7.  Regelungssystem nach einem der vorstehenden Ansprüche, welches basierend auf kartesischen Koordinaten berechnete Sensor- und Aktorsteuermatrizen ($\overleftrightarrow{g}_s$ bzw. $\overleftrightarrow{g}_a$) zu zur Modalentkopplung effektiven Sensor- und Aktorsteuermatrizen ($\overleftrightarrow{g}_{s\_cif}$ bzw. $\overleftrightarrow{g}_{a\_cff}$) verarbeitet, und zwar über die funktionale Verarbeitungsvorschrift $\overleftrightarrow{g}_{s\,eff} = \overleftrightarrow{V^T} \cdot g$, bzw. $\overleftrightarrow{g}_{a\_eff} = \overleftrightarrow{V^{-1}} \cdot \overleftrightarrow{g}_a$, wobei $\overleftrightarrow{V}$ die Eigenvektoren des aus der gelagerten Nutzlast und Isolatormodulen bestehenden dynamischen Systems enthält, welche die Reglervorrichtung berechnet.

8.  Reglervorrichtung für ein Regelungssystem zur aktiven Schwingungsisolation einer gelagerten Nutzlast, **dadurch gekennzeichnet, daß** die Reglervorrichtung (4) umfasst:

    eine Verarbeitungseinheit (41) zur Verarbeitung von Positionsdaten und Orientierungsdaten aller zur Verfügung stehenden Sensoren zur Lieferung von Sensorsignalen zu einer Sensorsteuermatrix ($\overleftrightarrow{g}_s$) sowie zur nachfolgenden Berechnung von Achseneingangssignalen in orthogonalen Freiheitsgraden aus den Sensorsignalen und der Sensorsteuermatrix, einen nachgeschalteten Regelungsstrecken-Kaskadenblock (42), zur Verarbeitung der Achseneingangssignale zu Achsenausgangssignalen in orthogonalen Freiheitsgraden, und eine nachgeschaltete Verarbeitungseinheit (43) zur Verarbeitung von Positionsdaten und Orientierungsdaten aller zur Verfügung stehenden Aktoren zur Schwingungsunterdrückung zu einer Aktorsteuermatrix ($\overleftrightarrow{g}_a$) sowie zur nachfolgenden Berechnung von Aktor-Stellsignalen aus den Achsenausgangssignalen und der Aktorsteuermatrix.

9.  Reglervorrichtung nach vorstehendem Anspruch, wobei die Verarbeitungseinheiten (41, 43), aus den einzugebenden Positionsdaten und Orientierungsdaten der Sensoren oder Aktoren eine Matrix der Form

$$\bar{A} = \begin{bmatrix} (\ddot{\bar{r}}_{g1})_x & (\ddot{\bar{r}}_{g2})_x & \cdots & (\ddot{\bar{r}}_{gN_\ell})_x \\ (\ddot{\bar{r}}_{g1})_y & (\ddot{\bar{r}}_{g2})_y & \cdots & (\ddot{\bar{r}}_{gN_\ell})_y \\ (\ddot{\bar{r}}_{g1})_z & (\ddot{\bar{r}}_{g2})_z & \cdots & (\ddot{\bar{r}}_{gN_\ell})_z \\ (\bar{p}_{g1} \times \ddot{\bar{r}}_{g1})_x & (\bar{p}_{g2} \times \ddot{\bar{r}}_{g2})_x & \cdots & (\bar{p}_{gN_\ell} \times \ddot{\bar{r}}_{gN_\ell})_x \\ (\bar{p}_{g1} \times \ddot{\bar{r}}_{g1})_y & (\bar{p}_{g2} \times \ddot{\bar{r}}_{g2})_y & \cdots & (\bar{p}_{gN_\ell} \times \ddot{\bar{r}}_{gN_\ell})_y \\ (\bar{p}_{g1} \times \ddot{\bar{r}}_{g1})_z & (\bar{p}_{g2} \times \ddot{\bar{r}}_{g2})_z & \cdots & (\bar{p}_{gN_\ell} \times \ddot{\bar{r}}_{gN_\ell})_z \end{bmatrix}$$

generieren, wobei Ng die Anzahl von Sensoren bzw. Aktoren, $\vec{p}_{gl}$ die jeweiligen Positionen und $\vec{r}_{gl}$ die jeweiligen Orientierungen in Bezug auf einen fixen Bezugspunkt des aus der gelagerten Nutzlast und Isolatormodulen bestehenden dynamischen Systems repräsentieren, und hierauf basierend eine Sensorsteuermatrix zur Entkopplung der Achseneingangssignale bzw. eine Aktorsteuermatrix zur Aufteilung der berechneten entkoppelten Achsenausgangssignale auf Aktor-Stellsignale in der Form $\overset{\leftrightarrow}{g}=[g_{ij}]$ generieren, und mit $g_{ij}$ der Orientierung des i-ten Sensors bzw. Aktors entsprechend das jeweilige Sensorsignal bzw. Aktor-Stellsignal in Bezug auf den j-ten kartesischen Freiheitsgrad anteilsmäßig gewichtet verarbeitet.

**10.** Reglervorrichtung nach einem der zwei vorstehenden Ansprüche, bei welchem die Verarbeitungseinheiten eine Singulärwertzerlegung zur Berechnung von bestimmten Lösungsvektoren der Sensorsteuermatrix bzw. der Aktorsteuermatrix durchführen.

**11.** Reglervorrichtung nach einem der drei vorstehenden Ansprüche, bei welchem die Verarbeitungseinheiten (41, 43) eine Berechnung der Starrkörper-Eigenmoden eines aus der gelagerten Nutzlast und Isolatormodulen bestehenden dynamischen Systems durchführen, und zwar basierend auf Eingabedaten, welche die Masse und die Hauptträgheitsmomente $I_{xx}$, $I_{yy}$ und $I_{zz}$ des Starrkörpers, die Anzahl $N_{IM}$ von passiven Isolationsmodulen, deren jeweilige Steifigkeit sowie deren Position und Richtung in Bezug auf den Schwerpunkt beschreiben.

**12.** Reglervorrichtung nach vorstehendem Anspruch, bei welchem die Verarbeitungseinheiten (41, 43) zur Berechnung der Eigenvektoren des dynamischen Systems in Modalkoordinaten ausgebildet sind und basierend auf kartesischen Koordinaten berechnete Sensor- und Aktorsteuermatrizen unter Einbeziehung der berechneten Eigenvektoren zu zur Modalentkopplung effektiven Sensor- und Aktorsteuermatrizen weiterverarbeiten.

**Claims**

**1.** Control system for active vibration isolation of a supported payload which comprises a number of vibration signal transducers or sensors for supplying sensor signals, a number of actuators for vibration suppression and a controller device for processing the sensor signals into actuator control signals, **characterised in that** the controller device (4) carries out processing of position data and orientation data of all available sensors to form a sensor control matrix $(\overset{\leftrightarrow}{g}_s)$ and carries out processing of position data and orientation data of all available actuators to form an actuator control matrix $(\overset{\leftrightarrow}{g}_a)$ and moreover for the subsequent calculation of axis input signals in orthogonal degrees of freedom from the sensor signals and the sensor control matrix, of axis output signals in orthogonal degrees of freedom for vibration suppression from the axis input signals and for calculation from the axis output signals and the actuator control matrix of correspondingly weighted actuator control signals.

**2.** Control system as claimed in the preceding claim, wherein the payload is supported by means of at least one isolator module, in particular a vertically and horizontally effective air bearing which comprises

   - a base plate (53);
   - an intermediate part (52) which is movably disposed on the base plate (53);
   - a piston (51) which is movably disposed inside the intermediate part (52) and supports the load (54) which is to be supported in a vibration-isolated manner with respect to the base plate (53) in a horizontal and vertical direction, wherein the diameter of the topside of the piston (51) with respect to the wall thickness of the intermediate part (52) is at a ratio of 10 to 36, preferably of 10 to 16, particularly preferably of 10.7 to 15.1.

**3.** Control system as claimed in any one of the preceding claims, having processing units (41, 43) which from position data and orientation data, which are to be input, of the sensors and actuators generate a matrix of the form

$$\tilde{A} = \begin{bmatrix} (\vec{r}_{g1})_x & (\vec{r}_{g2})_x & \cdots & (\vec{r}_{gN_g})_x \\ (\vec{r}_{g1})_y & (\vec{r}_{g2})_y & \cdots & (\vec{r}_{gN_g})_y \\ (\vec{r}_{g1})_z & (\vec{r}_{g2})_z & \cdots & (\vec{r}_{gN_g})_z \\ (\vec{p}_{g1} \times \vec{r}_{g1})_x & (\vec{p}_{g2} \times \vec{r}_{g2})_x & \cdots & (\vec{p}_{gN_g} \times \vec{r}_{gN_g})_x \\ (\vec{p}_{g1} \times \vec{r}_{g1})_y & (\vec{p}_{g2} \times \vec{r}_{g2})_y & \cdots & (\vec{p}_{gN_g} \times \vec{r}_{gN_g})_y \\ (\vec{p}_{g1} \times \vec{r}_{g1})_z & (\vec{p}_{g2} \times \vec{r}_{g2})_z & \cdots & (\vec{p}_{gN_g} \times \vec{r}_{gN_g})_z \end{bmatrix}$$

Wherein Ng represents the number of sensors or actuators, $\vec{p}_{gi}$ represents the respective positions and $\vec{r}_{gi}$ represents the respective orientations in relation to a fixed reference point of the dynamic system consisting of the supported payload and isolator modules, and based upon this they generate a sensor control matrix for decoupling the axis input signals or an actuator control matrix for dividing the calculated decoupled axis output signals in response to actuator control signals in the form of $\overleftrightarrow{g} = [g_{ij}]$ and with $g_{ij}$ of the orientation of the i$^{th}$ sensor or actuator correspondingly process the respective sensor signal or actuator control signal in relation to the j$^{th}$ Cartesian degree of freedom in a proportionally weighted manner.

4. Control system as claimed in the preceding,claim, wherein the processing units use a singular value breakdown to calculate specific solution vectors of the sensor control matrix or the actuator control matrix.

5. Control system is claimed in any one of the preceding claims, wherein the controller device carries out a calculation of the rigid body-eigenmodes of the dynamic system consisting of the supported payload and isolator modules, and moreover based upon input data which describe the mass and the main inertia moments of the rigid body, the number of passive isolation modules, their respective rigidity and their position and direction in relation to the centre of gravity.

6. Control system as claimed in the preceding claim, wherein the control device comprises processing units (41, 43) formed for the purpose of calculating the eigenvectors of the dynamic system in modal coordinates.

7. Control system as claimed in any one of the preceding claims, which processes sensor and actuator control matrices ($\overleftrightarrow{g}_s$ bzw. $\overleftrightarrow{g}_a$) which are calculated on the basis of Cartesian coordinates, to form sensor and actuator control matrices ($\overleftrightarrow{g}_{s\_eff}$ or $\overleftrightarrow{g}_{a-eff}$) effective for modal decoupling, and moreover by means of the functional processing rule $\overleftrightarrow{g}_{s-eff} = \overleftrightarrow{V^{T}} \cdot \overleftrightarrow{g}_s$ or $\overleftrightarrow{g}_{a\_eff} = \overleftrightarrow{V^{-1}} \cdot \overleftrightarrow{g}_a$, wherein $\overleftrightarrow{V}$ includes the eigenvectors of the dynamic system consisting of the supported payload and isolator modules which the controller device calculates.

8. Controller device for a control system for active vibration isolation of a supported payload, **characterised in that** the controller device (4) comprises:

a processing unit (4) for processing position data and orientation data of all available sensors for providing sensor signals to form a sensor control matrix ($\overleftrightarrow{g}_s$) and for the subsequent calculation of axis input signals in orthogonal degrees of freedom from sensor signals and the sensor control matrix, a control path cascade block (42) connected downstream for processing the axis input signals to,form axis output signals in orthogonal degrees of freedom, and a processing unit (43) connected downstream for processing position data and orientation data of all available actuators for vibration suppression to form an actuator control matrix ($\overleftrightarrow{g}_a$) and for the subsequent calculation of actuator control signals from the axis output signals and the actuator control matrix.

9. Controller device as claimed in the preceding claim, wherein the processing units (41, 43) use the position data and orientation data, which are to be input, of the sensors of actuators to generate a matrix of the form

$$\vec{A} = \begin{bmatrix} (\vec{r}_{g1})_x & (\vec{r}_{g2})_x & \cdots & (\vec{r}_{gN_g})_x \\ (\vec{r}_{g1})_y & (\vec{r}_{g2})_y & \cdots & (\vec{r}_{gN_g})_y \\ (\vec{r}_{g1})_z & (\vec{r}_{g2})_z & \cdots & (\vec{r}_{gN_g})_z \\ (\vec{p}_{g1} \times \vec{r}_{g1})_x & (\vec{p}_{g2} \times \vec{r}_{g2})_x & \cdots & (\vec{p}_{gN_g} \times \vec{r}_{gN_g})_x \\ (\vec{p}_{g1} \times \vec{r}_{g1})_y & (\vec{p}_{g2} \times \vec{r}_{g2})_y & \cdots & (\vec{p}_{gN_g} \times \vec{r}_{gN_g})_y \\ (\vec{p}_{g1} \times \vec{r}_{g1})_z & (\vec{p}_{g2} \times \vec{r}_{g2})_z & \cdots & (\vec{p}_{gN_g} \times \vec{r}_{gN_g})_z \end{bmatrix}$$

Wherein Ng represents the number of sensors of actuators, $\vec{p}_{gi}$ represents the respective positions and $\vec{r}_{gi}$ represents the respective orientations in relation to a fixed reference point of the dynamic system consisting of the supported payload and isolator modules, and based upon this they generate a sensor control matrix for decoupling the axis input signals or an actuator control matrix for dividing the calculated decoupled axis output signals in response to actuator control signals in the form of $\overleftrightarrow{g} = [g_{ij}]$ and with $g_{ij}$ of the orientation of the ith sensor or actuator correspondingly process the respective sensor signal or actuator control signals in relation to the jth Cartesian degree of freedom in a proportionally weighted manner.

10. Controller device as claimed in any one of the two preceding claims, wherein the processing units carry out a singular value breakdown for calculating specific solution vectors of the sensor control matrix or the actuator control matrix.

11. Controller device as claimed in any one of the three preceding claims, wherein the processing units (41, 43) carry out a calculation of the rigid body-eigenmodes of a dynamic system consisting of the supported payload and isolator modules, and moreover based upon input data which describe the mass and the main inertia moments $I_{xx}$, $I_{yy}$ and $I_{zz}$ of the rigid body, the number $N_{IM}$ of passive isolation modules, their respective rigidity and their position and direction in relation to the centre of gravity.

12. Controller device as claimed in the preceding claim, wherein the processing units (41, 43) are formed for calculating the eigenvectors of the dynamic system in modal coordinates and further process sensor and actuator control matrices, which are calculated on the basis of Cartesian coordinates, with the incorporation of the calculated eigenvectors to form sensor and actuator control matrices effective for modal decoupling.

**Revendications**

1. Système de régulation pour l'isolation active des vibrations d'une charge utile stockée, qui comporte un certain nombre de générateurs de signaux de vibrations ou de capteurs pour la fourniture de signaux de capteurs, un certain nombre d[1]actionneurs pour l'atténuation des vibrations et un dispositif régulateur pour le traitement des signaux de capteur en signaux de commande d'actionneur,
**caractérisé en ce que** le dispositif régulateur (4) effectue un traitement de données de position et de données d'orientation de tous les capteurs mis à disposition pour former une matrice de commande de capteur $(\overleftrightarrow{g}_s)$ et un traitement de données de position et de données d'orientation de tous les actionneurs mis à disposition, pour former une matrice de commande d'actionneur $(\overleftrightarrow{g}_a)$, et ce pour le calcul consécutif de signaux d'entrée d'axe dans des degrés de liberté orthogonaux à partir des signaux de capteur et de la matrice de commande de capteur, de signaux de sortie d'axe dans des degrés de liberté orthogonaux pour l'atténuation des vibrations à partir des signaux d'entrée d'axe et pour le calcul à partir des signaux de sortie d'axe et de la matrice de commande d'actionneur de signaux de commande d'actionneur pondérés en conséquence.

2. Système de régulation selon la revendication précédente, la charge utile étant stockée au moyen d'au moins un module d'isolateur, en particulier un palier d'air efficace verticalement et horizontalement, qui comporte

- une plaque de base (53),
- une partie intermédiaire (52), qui est disposée de façon mobile sur la plaque de base (53) ; et
- un piston (51) qui est fixé de façon mobile à l'intérieur de la partie intermédiaire (52) et qui porte la charge (54), qui doit être supportée de façon isolée vis-à-vis des vibrations par rapport à la plaque de base (53) dans la direction horizontale et la direction verticale, le diamètre du côté supérieur du piston (51) par rapport à l'épaisseur de paroi de la partie intermédiaire (52) se situant dans un rapport de 10 à 36, de préférence de 10 à 16, avec une préférence particulière de 10,7 à 15,1.

**3.** Système de régulation selon l'une quelconque des revendications précédentes, comprenant des unités de traitement (41, 43), lesquelles génèrent à partir de données de position et données d'orientation à entrer des capteurs et actionneurs une matrice de la forme suivante,

$$
\vec{A} = \begin{bmatrix}
(\vec{r}_{g1})_x & (\vec{r}_{g2})_x & \cdots & (\vec{r}_{gN_g})_x \\
(\vec{r}_{g1})_y & (\vec{r}_{g2})_y & \cdots & (\vec{r}_{gN_g})_y \\
(\vec{r}_{g1})_z & (\vec{r}_{g2})_z & \cdots & (\vec{r}_{gN_g})_z \\
(\vec{p}_{g1} \times \vec{r}_{g1})_x & (\vec{p}_{g2} \times \vec{r}_{g2})_x & \cdots & (\vec{p}_{gN_g} \times \vec{r}_{gN_g})_x \\
(\vec{p}_{g1} \times \vec{r}_{g1})_y & (\vec{p}_{g2} \times \vec{r}_{g2})_y & \cdots & (\vec{p}_{gN_g} \times \vec{r}_{gN_g})_y \\
(\vec{p}_{g1} \times \vec{r}_{g1})_z & (\vec{p}_{g2} \times \vec{r}_{g2})_z & \cdots & (\vec{p}_{gN_g} \times \vec{r}_{gN_g})_z
\end{bmatrix}
$$

Ng représentant le nombre de capteurs ou d'actionneurs, $\vec{p}_{gi}$ les positions respectives et $\vec{r}_{gi}$ les orientations respectives par rapport à un point de référence fixe du système dynamique comprenant la charge utile stockée et des modules d'isolateur, et sur cette baseune matrice de commande de capteur pour la dissociation des signaux d'entrée d'axe et une matrice de commande d'actionneur pour la répartition des signaux de sortie d'axe dissociés et calculés entre des signaux de commande d'actionneur sous la forme $\overleftrightarrow{g} = [g_{ij}]$ et traitent avec $g_{ij}$ en fonction de l'orientation du i-ème capteur ou actionneur le signal de capteur respectif ou des signaux de commande d'actionneur par rapport au j-ième degré de liberté cartésien avec une pondération au prorata.

**4.** Système de régulation selon la revendication précédente, dans lequel les unités de traitement calculent au moyen d'une décomposition de valeur singulière des vecteurs de solution définis de la matrice de commande de capteur ou de la matrice de commande d'actionneur.

**5.** Système de régulation selon l'une quelconque des revendications précédentes, dans lequel le dispositif régulateur effectue un calcul des modes propres de corps rigides du système dynamique constitué de la charge utile stockée et de modules d'isolateur, et ce sur la base de données d'entrée qui décrivent la masse et les moments d'inertie principaux du corps rigide, le nombre de modules d'isolation passifs, leur rigidité respective ainsi que leur position et direction par rapport au centre de gravité.

**6.** Système de régulation selon la revendication précédente, sur lequel le dispositif de régulation pour le calcul des vecteurs propres du système dynamique comporte des unités de traitement (41, 43) réalisées dans des coordonnées modales.

**7.** Système de régulation selon l'une quelconque des revendications, qui traite des matrices de commande de capteur et d'actionneur ($\overleftrightarrow{g}_s$ et $\overleftrightarrow{g}_a$) calculées sur la base de coordonnées cartésiennes en matrices de commande d'actionneur ($\overleftrightarrow{g}_{s\_eff}$ et $\overleftrightarrow{g}_{a-eff}$) effectives pour la dissociation modale, et ce par la prescription de traitement fonctionnelle $\overleftrightarrow{g}_{s-eff} = \overleftrightarrow{V^T} \cdot \overleftrightarrow{g}_s$ et $\overleftrightarrow{g}_{a-eff} = \overleftrightarrow{V^{-1}} \cdot \overleftrightarrow{g}_a$, $\overleftrightarrow{V}$ contenant les vecteurs propres du système dynamique constitué de la charge utile stockée et de modules d'isolateur, qui calcule le dispositif régulateur.

**8.** Dispositif régulateur pour un système de régulation pour l'isolation de vibrations active d'une charge utile stockée, **caractérisé en ce que** le dispositif régulateur (4) comporte :

une unité de traitement (41) pour le traitement de données de position et de données d'orientation de tous les capteurs mis à disposition pour la fourniture de signaux de capteur en une matrice de commande de capteur ($\overleftrightarrow{g}_s$) ainsi que pour le calcul consécutif de signaux d'entrée d'axe dans des degrés de liberté orthogonaux à partir des signaux de capteur et de la matrice de commande de capteur, un bloc en cascade de tronçon de régulation (42) monté en aval, pour le traitement des signaux d'entrée d'axe en signaux de sortie d'axe dans des degrés de liberté orthogonaux, et une unité de traitement (43) placée en aval pour le traitement de données de position et de données d'orientation de tous les actionneurs mis à disposition pour la suppression de vibrations pour former une matrice de commande d'actionneur ($\overleftrightarrow{g}_a$) ainsi que pour le calcul consécutif de signaux de commande d'actionneur à partir des signaux de sortie d'axe et de la matrice de commande d'actionneur.

9. Dispositif régulateur selon la revendication précédente, les unités de traitements (41, 43) générant à partir des données de position et d'orientation à entrer des capteurs ou actionneurs une matrice de la forme suivante,

$$\tilde{A} = \begin{bmatrix} (\vec{r}_{g1})_x & (\vec{r}_{g2})_x & \cdots & (\vec{r}_{gN_g})_x \\ (\vec{r}_{g1})_y & (\vec{r}_{g2})_y & \cdots & (\vec{r}_{gN_g})_y \\ (\vec{r}_{g1})_z & (\vec{r}_{g2})_z & \cdots & (\vec{r}_{gN_g})_z \\ (\vec{p}_{g1} \times \vec{r}_{g1})_x & (\vec{p}_{g2} \times \vec{r}_{g2})_x & \cdots & (\vec{p}_{gN_g} \times \vec{r}_{gN_g})_x \\ (\vec{p}_{g1} \times \vec{r}_{g1})_y & (\vec{p}_{g2} \times \vec{r}_{g2})_y & \cdots & (\vec{p}_{gN_g} \times \vec{r}_{gN_g})_y \\ (\vec{p}_{g1} \times \vec{r}_{g1})_z & (\vec{p}_{g2} \times \vec{r}_{g2})_z & \cdots & (\vec{p}_{gN_g} \times \vec{r}_{gN_g})_z \end{bmatrix}$$

Ng représentant le nombre de capteurs ou d'actionneurs, $\vec{p}_{gi}$ les positions respectives et $\vec{r}_{gi}$ les orientations respectives par rapport à un point de référence fixe du système dynamique constitué de la charge utile montée sur palier et de modules d'isolateur, et générant sur cette base une matrice de commande d'actionneur pour la dissociation des signaux d'entrée d'axe ou une matrice de commande d'actionneur pour la répartition des signaux de sortie d'axe dissociés et calculés entre des signaux de commande d'actionneur sous la forme $\overleftrightarrow{g}=[g_{ij}]$ et traitant avec $g_{ij}$ en fonction de l'orientation du i-ème capteur ou actionneur le signal de capteur respectif ou des signaux de commande d'actionneur respectifs par rapport au j-ième degré de liberté cartésien avec une pondération au prorata.

10. Dispositif régulateur selon l'une quelconque des deux revendications précédentes, sur lequel les unités de traitement effectuent une décomposition de la valeur singulière pour le calcul de certains vecteurs de solution de la matrice de commande de capteur ou de la matrice de commande d'actionneur.

11. Dispositif régulateur selon l'une quelconque des trois revendications précédentes, selon lequel les unités de traitement (41, 43) effectuent un calcul des modes propres du corps rigide d'un système dynamique constitué de la charge utile montée sur palier et de modules d'isolateur, et ce sur la base de données d'entrée qui décrivent la masse et les moments d'inertie principaux $I_{xx}$, $I_{yy}$ et $I_{zz}$ du corps rigide, le nombre $N_{IM}$ de modules d'isolation passifs, leur rigidité respective ainsi que leur position et orientation par rapport au centre de gravité.

12. Dispositif régulateur selon la revendication précédente, selon laquelle les unités de traitement (41, 43) sont conçus pour le calcul des vecteurs propres du système dynamique sous forme de coordonnées modales et retraitent des matrices de commande de capteur et d'actionneur calculées sur la base de coordonnées cartésiennes en intégrant les vecteurs propres calculés en matrices de commande de capteur et d'actionneur effectives pour la dissociation modale.

Fig. 1

EP 1 956 459 B1

<u>Fig. 2</u>

41

$$\vec{A}_i = \vec{g}_s \cdot \vec{S}_s$$

$\vec{S}_s$

42

| AxisInput[1] | → | Biquad1 | → | Biquad2 | → | Biquad3 | → | Biquad4 | → | Biquad5 | → | AxisOutput[1] |
| AxisInput[2] | → | Biquad1 | → | Biquad2 | → | Biquad3 | → | Biquad4 | → | Biquad5 | → | AxisOutput[2] |
| AxisInput[3] | → | Biquad1 | → | Biquad2 | → | Biquad3 | → | Biquad4 | → | Biquad5 | → | AxisOutput[3] |
| — — — — | | | | — — — — | | | | — — — — | | |
| AxisInput[6] | → | Biquad1 | → | Biquad2 | → | Biquad3 | → | Biquad4 | → | Biquad5 | → | AxisOutput[6] |

43

$$\vec{S}_a = \vec{g}_a \cdot \vec{A}_o$$

$\vec{A}_o$

21

Fig. 3

Fig. 4

Fig. 5

51    54

52

53

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1197824 A1
- US 4999534 A
- EP 05017138 A
- EP 06026425 A